# EUROPEAN PATENT APPLICATION

(11) **EP 4 765 795 A1**
(43) Date of publication of application: **24.06.2026**
(21) Application number: 25222272.4
(22) Date of filing: 10.12.2025
(51) Int. Cl.: H04N 1/00, B41F 33/00

(54) **IMAGE FORMING APPARATUS, AND CONTROL METHOD AND CONTROL PROGRAM THEREFOR**

(30) Priority: 18.12.2024 JP 2024221798
(71) Applicant: Konica Minolta, Inc., Tokyo 100-7015 (JP)
(72) Inventor: KIWADA, Masakatsu, Tokyo, 100-7015 (JP)
(74) Representative: MFG Patentanwälte Meyer-Wildhagen Meggle-Freund Gerhard PartG mbB

(57) **Abstract**

An image forming apparatus includes: an image reader (161) configured to acquire a read image (40;41;43) by reading an image of a printed material; an inspection determination section configured to determine inspection (55) by comparing the read image read by the image reader with a correct image; a first post-inspection processing section (51) configured to perform a first post-inspection processing on a first inspection error in a first area (4011;4021;4111;4121;4311;4321) of the read image; and a second post-inspection processing section (52) configured to perform a second post-inspection processing different from the first post-inspection processing on a second inspection error in a second area (4012;4022;4112;4122;4312;4322) of the read image.

## Description

### Cross-Reference to Related Application

The entire disclosure of Japanese Patent Application No. 2024-221798, filed on December 18, 2024, is incorporated herein by reference in its entirety

### Background of the Invention

### Technical Field

The present invention relates to an image forming apparatus, and a control method and a control program therefor.

### Description of Related Art

"Variable print" is known in which printing is performed while information to be printed is changed based on data. Variable print is a printing technology capable of printing while changing the content of each sheet, like a gift certificate to which an address or a serial number of a mail item is assigned. The variable print has a "variable area" which is an area where individual data is printed, and a "fixed area" which is a common area that does not change even if the individual data is changed. That is, the variable print has a plurality of areas different in data generation method in a single printed material. In addition to variable print, a single printed material may include a plurality of areas having different specifications, such as a "spot color area" requiring high color reproducibility like a corporate color area and a "non-spot color area" having normal color reproducibility.

In this way, when inspecting a printed material having a plurality of areas with different data generation methods and specifications, the inspection device can perform inspection for each area. For example, PTL 1 (Japanese Unexamined Patent Publication No. 2013-005092) describes an inspection device that changes determination criteria for inspection depending on the area.

### Summary of the invention

In a case where an inspection error (inspection failure) occurs in inspection, reprinting is required. However, the same inspection error may occur again even if reprinting is performed. For example, when data in a variable area needs to be replaced in variable print or when ink needs to be adjusted in a printed material having a spot color area, it is necessary to remove the cause of the inspection error before reprinting. Therefore, even if reprinting is repeated, the operation of the apparatus and consumables such as printing sheet are wasted.

The present invention has been made to solve the above problems, and has an object to provide the following image forming apparatus, and control method and control program therefor. According to the apparatus or the like, it is possible to perform processing corresponding to the area in which the inspection error has occurred by performing different post-inspection processing depending on the area in which the inspection error has occurred. Thus, for example, consumption of consumables such as printing sheets due to wasteful reprinting and purging is reduced.

To achieve the object, according to an aspect of the present invention, an image forming apparatus includes: an image reader configured to acquire a read image by reading an image of a printed material; an inspection determination section configured to determine inspection by comparing the read image read by the image reader with a correct image; a first post-inspection processing section configured to perform a first post-inspection processing on a first inspection error in a first area of the read image; and a second post-inspection processing section configured to perform a second post-inspection processing different from the first post-inspection processing on a second inspection error in a second area of the read image.

### Brief Description of the Drawings

The advantages and features provided by one or more embodiments of the invention will become more fully understood from the detailed description given herein below and the appended drawings which are given by way of illustration only, and thus are not intended as a definition of the limits of the present invention.
Fig. 1 is a schematic diagram illustrating an outline of arrangement of each device in the image forming apparatus according to the embodiment.
Fig. 2A is a block diagram illustrating a hardware configuration of an image forming apparatus according to an embodiment.
Fig. 2B is a block diagram illustrating a functional configuration of an inspection controller according to an embodiment.
FIG. 3 is a schematic diagram illustrating image data according to the first embodiment.
FIG. 4 is a schematic diagram illustrating a read image in the first embodiment.
FIG. 5 is a schematic diagram illustrating one of the correct images in the first embodiment.
Fig. 6A is a schematic diagram illustrating image data in a print job according to the first embodiment.
Fig. 6B is a table illustrating job information in a print job according to the first embodiment.
Fig. 6C is a table illustrating page information in a print job according to the first embodiment.
Fig. 7 is a table illustrating inspection setting information in inspection according to the first embodiment.
FIG. 8 is a schematic diagram illustrating an inspection error of the first area in the first embodiment.
Fig. 9 is a schematic diagram illustrating an inspection error of the second area in the first embodiment.
FIG. 10 is a flowchart illustrating the flow of processing in the first embodiment.
Fig. 11 is a schematic diagram illustrating image data in the second embodiment.
FIG. 12 is a schematic diagram illustrating a read image according to the second embodiment.
FIG. 13 is a schematic diagram illustrating a part of the correct image according to the second embodiment.
FIG. 14 is a schematic diagram illustrating a correct image in the second embodiment.
Fig. 15A is a schematic diagram illustrating image data in a print job according to the second embodiment.
Fig. 15B is a table illustrating job information in a print job according to the second embodiment.
Fig. 15C is a table illustrating page information in a print job according to the second embodiment.
Fig. 16 is a table illustrating inspection setting information in inspection according to the second embodiment.
Fig. 17 is a schematic diagram illustrating an inspection error of the first area in the second embodiment.
FIG. 18 is a schematic diagram illustrating an inspection error of the second area in the second embodiment.
Fig. 19 is a schematic diagram illustrating stains on the first area in the second embodiment.
FIG. 20 is a schematic diagram illustrating a character difference in the second area according to the second embodiment.
Fig. 21 is a flowchart illustrating the flow of processing in the second embodiment.
Fig. 22 is a schematic diagram illustrating image data in a third embodiment.
Fig. 23A is a schematic diagram illustrating image data in a print job according to a third embodiment.
Fig. 23B is a table illustrating job information in a print job according to a third embodiment.
Fig. 23C is a table illustrating page information in a print job according to a third embodiment.
Fig. 24 is a table illustrating inspection setting information in inspection according to a third embodiment.
FIG. 25 is a schematic diagram illustrating an inspection error of the first area in the third embodiment.
FIG. 26 is a schematic diagram illustrating an inspection error of the second area in the third embodiment.
Fig. 27 is a flowchart illustrating the flow of processing in a third embodiment.
Fig. 28 is a schematic diagram illustrating image data in a fourth embodiment.
Fig. 29A is a schematic diagram illustrating image data in a print job according to a fourth embodiment.
Fig. 29B is a table illustrating job information in a print job according to an embodiment.
Fig. 29C is a table illustrating page information in a print job of a fourth embodiment.
Fig. 30 is a table illustrating inspection setting information in inspection according to a fourth embodiment.
Fig. 31 is a schematic diagram illustrating an inspection error of a non-printing area in the fourth embodiment.
Fig. 32 is a schematic diagram illustrating a printing area inspection error in a fourth embodiment.
Fig. 33 is a flowchart illustrating the flow of processing in a fourth embodiment.
Fig. 34 is a schematic diagram illustrating image data in a fifth embodiment.
Fig. 35 is a schematic diagram illustrating a read image in a fifth embodiment.
FIG. 36 is a schematic diagram illustrating a part of a correct image according to the fifth embodiment.
FIG. 37 is a schematic diagram illustrating a correct image according to the fifth embodiment.
Fig. 38A is a schematic diagram illustrating image data in a print job of a fifth embodiment.
Fig. 38B is a table illustrating job information in a print job according to an embodiment.
Fig. 38C is a table illustrating page information in a print job according to a fifth embodiment.
Fig. 39 is a table illustrating inspection setting information in inspection according to the fifth embodiment.
FIG. 40 is a schematic diagram illustrating an inspection error of the second area in the fifth embodiment.
FIG. 41 is a table illustrating the OCR processing result of the second area in the fifth embodiment.
Fig. 42 is a schematic diagram illustrating character thinning processing according to a fifth embodiment.
Fig. 43 is a schematic diagram illustrating character smoothing processing according to an embodiment.
Fig. 44 is a schematic diagram illustrating edge enhancement processing for a character in a fifth embodiment.
Fig. 45 is a schematic diagram illustrating screen change processing for a character in a fifth embodiment.
Fig. 46 is a flowchart illustrating the flow of processing in a fifth embodiment.
Fig. 47 is a flowchart illustrating the flow of processing in a sixth embodiment.

### Detailed Description

Hereinafter, one or more embodiments of the present invention will be described with reference to the drawings. However, the scope of the invention is not limited to the disclosed embodiments. Various design modifications are possible based on the description in the scope of the claims. The embodiment can be combined as appropriate.

### (First Embodiment)

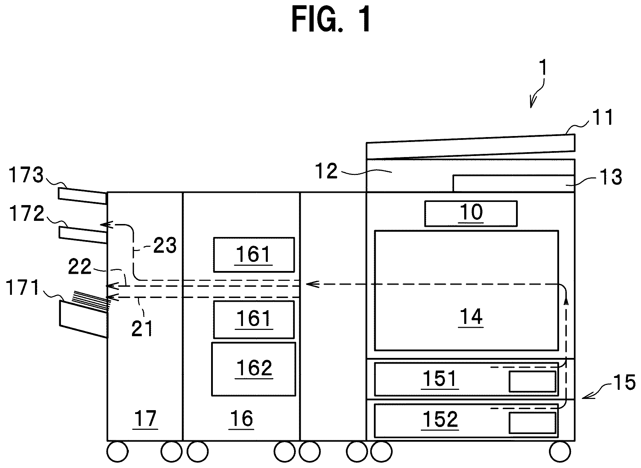

Referring to Figs. 1 to 9, an image forming apparatus 1 according to a first embodiment will be described. The image forming apparatus 1 is an image forming apparatus having an automatic inspection function. In automatic inspection, printed material or the like on which an image formation has been formed is inspected for text content, color reproducibility, stain, and the like. Passed products of the inspection are output separately from rejected products and the like. The image formation method may be an electrophotographic method or an electrostatic recording method, and may be an inkjet method. Hereinafter, an apparatus that performs image formation by an electrophotographic method will be described. As illustrated in Fig. 1, the image forming apparatus 1 includes a sheet feed device 15, an image forming section 14, a post-processing device 17, a controller 10, an inspection device 16, and an operation section 13. The image forming apparatus 1 also includes a document conveyance section 11 and a document reading section 12. Hereinafter, each configuration of the image forming apparatus 1 will be described.

### (Document Conveyance Section and Document Reading Section)

The image forming apparatus 1 includes a document conveyance section 11 and a document reading section 12. The document conveyance section 11 is a device that automatically conveys one or a plurality of document sheets to the document reading section 12. The document reading section 12 is a device that optically reads an image from a document sheet. The document image data read by the document reading section 12 is used for image formation.

### (Operation Section)

The operation section 13 is a device with which a user performs an operation related to the image forming apparatus 1 and inputs various settings. The operation section 13 displays information such as a state of the image forming apparatus 1 to a user. When the operation section 13 is a touch screen, display, operation, and the like can be processed in parallel. Note that an input such as an operation and a display may be provided as separate devices. The installation location is not particularly limited, and for example, may be a location away from the image forming section 14 or the like. The operation section 13 may be an external terminal such as a personal computer.

### (Sheet Feed Device)

The sheet feed device 15 feeds a recording medium (hereinafter referred to as a "sheet") for image formation such as a printing sheet is stored and sent to the next stage device. Here, the sheet feed device 15 includes two sheet feed sections 151 and 152 that store sheets, and feeds a sheet to the image forming section 14. The sheet feed device 15 may include one sheet feed section or three or more sheet feed sections. The image forming apparatus 1 may include a plurality of sheet feed devices 15.

### (Image Forming Section)

The image forming section 14 is a device that performs image formation on a sheet. Here, constituent elements necessary for forming an image in an image forming apparatus utilizing an electrophotographic method are collectively referred to as an image forming section. The image forming section 14 includes a photoreceptor drum on which an electrostatic latent image is formed, and a developing device that develops the electrostatic latent image into a toner image. The image forming section 14 includes a transfer roller that transfers the developed toner image onto the sheet. The image forming section 14 includes a fixing device that fixes the transferred toner image onto the sheet by heat pressure fixing or the like. The image forming section 14 uses document image data read from the document reading section 12 or image data generated from a print job received via the communication section of the controller 10 (hereinafter, simply referred to as "image data" or "print data" in some cases). The image forming apparatus 14 forms the image data on the sheet conveyed from the sheet feed section 151 or 152, and sends out the sheet to an apparatus at the next stage.

### (Post-processing Device)

The post-processing device 17 is an apparatus that outputs a sheet fed from the apparatus of the preceding stage. The post-processing device 17 includes an output section for stacking sheets. Then, according to an instruction from the controller 10, the sheet is conveyed by a conveyance roller, a switching claw, or the like, and is discharged to the output section. The post-processing device 17 can have a plurality of output sections, here three output sections 171, 172, 173. Thus, sheets can be sorted and output according to the result of inspection or the like. For example, the post-processing device 17 determines that the inspection, which is passed (hereinafter, referred to as "inspection OK"), is discharged to the output section 171, and inspection failure (hereinafter, may be referred to as "inspection NG" or "inspection error"). The defective product is discharged to output sections 172 and 173. Fig. 1 illustrates a path 21 of a printed material read for the generation of a correct image before the start of inspection, a path 22 of an inspection non-defective product after the start of inspection, and a path 23 of an inspection defective product. The post-processing device 17 can have a function of performing a finishing process desired by the user, such as staple, punch, folding, cutting, or perforating, and outputting the processed sheet.

### (Inspection Device)

The inspection device 16 is a device for inspecting the sheet on which the image formation has been formed. Here, the inspection device 16 inspects the sheet conveyed from the image forming section 14 in accordance with an instruction from the controller 10. Next, the inspection device 16 separates the inspected printed material into passed products and rejected products, and sends them to the next device. Note that the inspection means inspection of the presence or absence of abnormality such as out of page order, stains, and wrinkles, the consistency of text content, color reproducibility, and the like, it means to determine pass or fail. The inspection device 16 includes an image reading section 161 and a storage section 162. The image reading section 161 acquires a read image by reading an image of a printed material, and reads an image on a sheet conveyed from the image forming section 14. The storage section 162 stores a correct image to be used for inspection, and holds a correct image. The correct image is to be referred to in inspection. The storage section 162 registers and holds a plurality of types of images as correct images.

### (Controller)

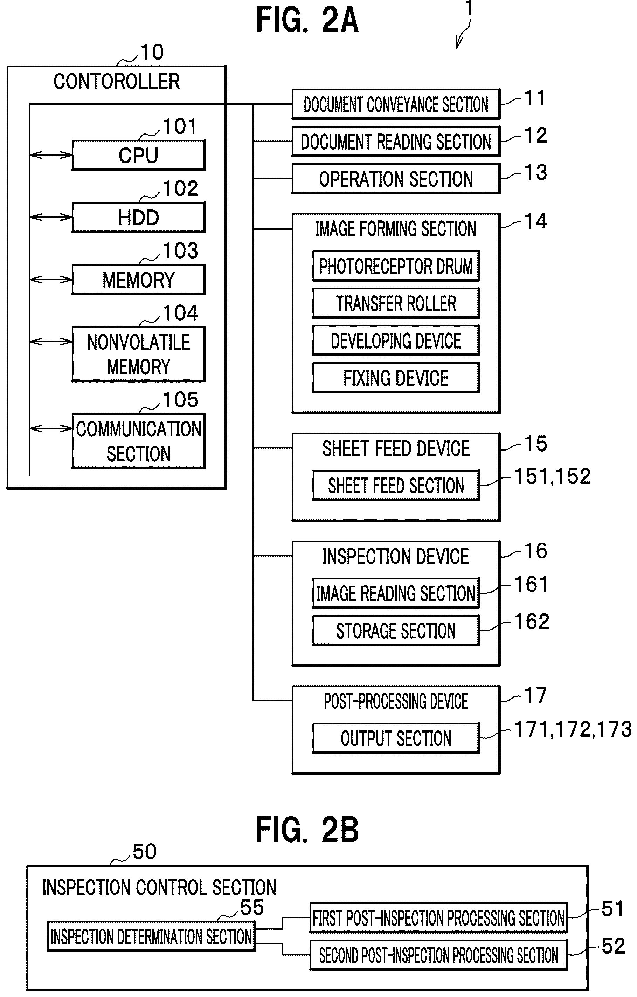

Controller 10 controls each device of image forming apparatus 1. The controller 10 controls each apparatus from sheet feed to image formation and sheet ejection in the image forming apparatus 1. As illustrated in FIG. 2A, the controller 10 includes a central processing unit 101, a hard disk drive (HDD) 102, a memory 103, a nonvolatile memory 104, and a communication section 105. These are connected to each other via a bus, and further connected to each device of the image forming apparatus 1.

The CPU101 executes various programs. For example, in image formation, the CPU101 rasterizes print data in the memory 103 to generate bitmap date in each color of cyan, magenta, yellow, and black (CMYK) for printing. Then, the generated data is transferred to the image forming section 14. The HDD102 is an auxiliary storage device. The HDD102 stores a program for the CPU101 to control each device, information on the processing function of each device, a print job received from the document reading section 12 or the communication section 105, and the like.

The memory 103 and the nonvolatile memory 104 are main storage devices. The memory 103 temporarily stores print job and various kinds of date in the CPU101 execution processing. The nonvolatile memory 104 stores a program for activating each device. The communication section 105 is a device responsible for communication with the outside. The communication section 105 is connected to a network via a local area network (LAN) cable or the like. The communication section 105 establishes connection with an external client computer or the like, and executes transmission and reception of data such as a print job and various statuses.

The controller 10 receives a print job from an external client computer or the like via the communication section 105. The print job includes job information, page information, and information as a source of image data. The controller 10 expands and analyzes the print job on the memory 103. The controller 10 also has the function of an image processing section which analyzes a print job received from the communication section 105 and generates image data. The job information is information common to the entire job, such as the number of pages, the number of copies, and finishing processing. The page information includes information on a sheet, such as the size and paper type of the sheet, and information on each page, such as whether printing is color printing. The image data is used for image formation in the image forming section 14.

### (Image Data)

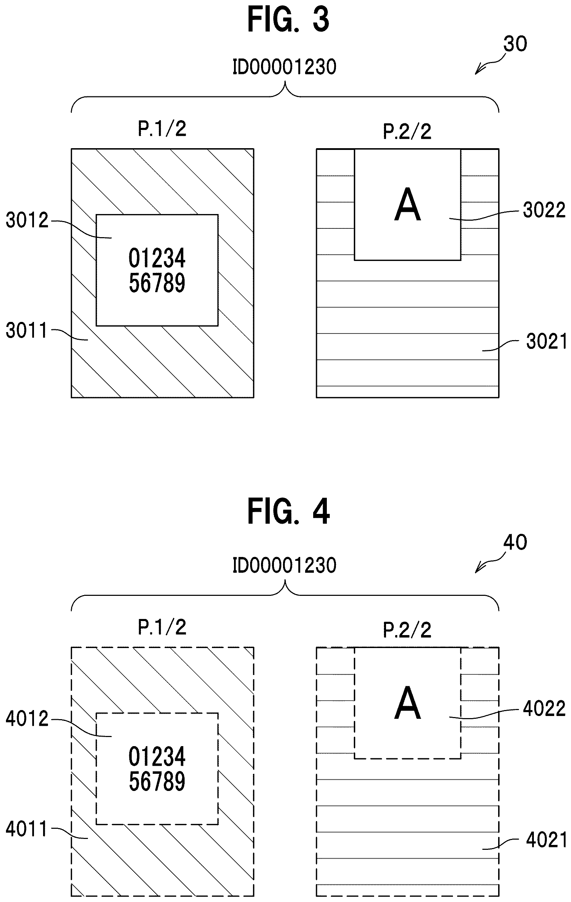

The image data may include a plurality of areas. The controller 10 analyzes the image data and determines the number of areas and the positions of the areas in the image data. As illustrated in Fig. 3, the image data 30 has first areas 3011 and 3021 and second areas 3012 and 3022. The image data 30 is an image data of the print job ID00001230. Note that in the drawings, a print job having a job ID of x is denoted by IDx.

The first area 3011 and the second area 3012 are different areas in the image data and do not overlap each other. Here, the second area 3012 has characters arranged on a solid background, and the first area 3011 has no character and a pattern in its entirety. The first area 3011 is disposed so as to surround the second area 3012. The same applies to the first area 3021 and the second area 3022. Note that the plurality of areas of the image data may have no difference in the presence or absence of characters or patterns, and for example, the same pattern may be continuous over the entire page. The plurality of areas of the image data are divided by coordinates in the image data even when there is no difference in content, and the controller 10 can distinguish the plurality of areas. Furthermore, the image data can have three or more areas.

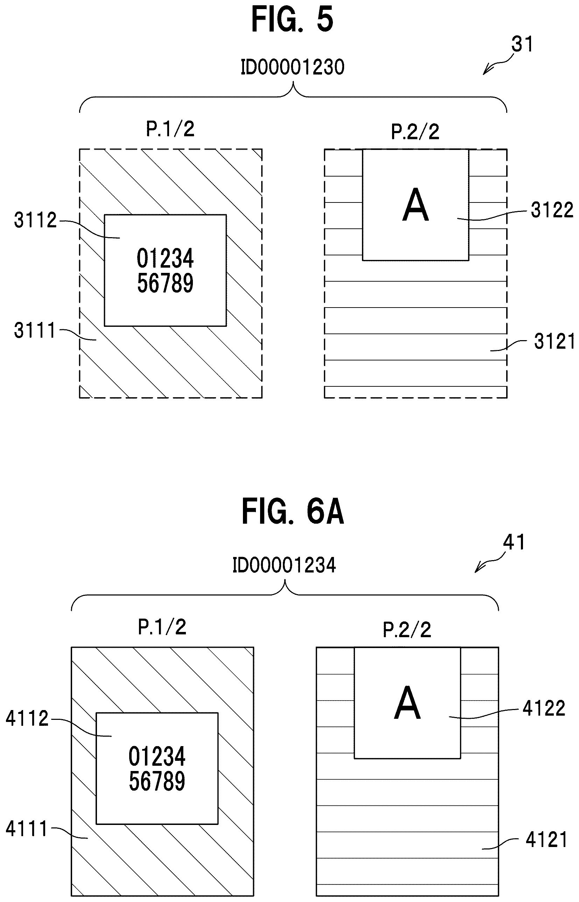

The image data 30 includes data for two pages. The second area 3012 of the first page includes the letters "0123456789". The second area 3022 of the second page includes the character "A". The first area 3011 on the first page and the first area 3021 on the second page have different patterns respectively. Note that in the drawings, the symbol "P. x/y" represents y pages in total and an image on the x-th page. In order to distinguish between the image data used for image formation and the read image read by the image reading section 161, a solid line is provided along the outer periphery of the image data and a broken line is provided along the outer periphery of the read image (see Figs. 4 and 5).

### (Correct Image)

The inspection control section 50 of the controller 10 performs inspection using the correct image registered in the storage section 162. The inspection control section 50 registers a plurality of different types of correct images in the storage section 162. The inspection control section 50 registers the image data included in the print job as it is in the storage section 162 as a first correct image. For example, the image data 30 may be registered as it is as a correct image. The image read by the image reading section 161 may be used as the correct image. The inspection control section 50 registers the read image read by the image reading section 161 in the storage section 162 as the second correct image. As illustrated in Fig. 4, here, the read image 40 of a total of two pages including the first areas 4011 and 4021 and the second areas 4012 and 4022 are acquired. The read image 40 is obtained by reading the printed material, on which the image formation is formed from the image data 30, by the image reading section 161 of the inspection device 16. The inspection control section 50 may register the read image 40 as a correct image.

The correct image may employ the print data of one of the first area and the second area and the image read by the other image reading section 161 in combination. The inspection control section 50 registers, as a third correct image, data obtained by combining the image data and the read image in the storage section 162. Combining refers to, for example, extracting one of the first area and the second area from the image data, extracting the other from the read image, and combining these. Here, the first areas 4011 and 4021 of the read image 40 and the second areas 3012 and 3022 of the image data 30 are combined to generate the correct image 31. In Fig. 5, first areas 3111 and 3121 are for data of the first areas 4011 and 4021 of the read image 40, and second areas 3112 and 3122 are for data of the second areas 3012 and 3022 of the image data 30.

The first, second, and third correct images are image data itself, a read image of a printed material based on image data, or a combination thereof. Here, both are data based on the image data 30 included in the print job whose job ID is 00001230. In addition to these, for example, an image read by the document reading section 12 or an image transmitted from the outside of the image forming apparatus 1 may be used or combined as the correct image. In addition, the correct image can be generated by various methods other than the above methods, and can be selected and used in accordance with the purpose.

In a case where the read image is used as the correct image, in a print job for printing a plurality of copies, the read image of the first copy can be used as the correct image. That is, the image forming apparatus 1 reads the first copy by the image reading section 161 while printing the first copy, and registers the first copy as a correct image in the storage section 162. Next, the second and subsequent copies are read by the image reading section 161 while being printed as inspection targets, and are compared with the correct image for inspection. The image forming apparatus 1 sets the read image of the preceding printed material as the correct image, thereby effectively using materials and the like. Note that the image forming apparatus 1 may perform printing separately so as to use the read image of the first copy for the correct image without using it for the correct image, and can proceed with the print job by various methods.

### (Inspection)

The controller 10 instructs the image forming section 14 to perform image formation based on the print job. The controller 10 instructs the inspection device 16 to perform inspection in cooperation with the inspection device 16. The inspection is performed by comparing the printed material to be inspected with the correct image, that is, an image to be referred to in the inspection. The controller 10 includes an inspection control section 50. The inspection control section 50 is a means for controlling the inspection. As illustrated in Fig. 2B, the inspection control section 50 includes an inspection determination section 55, a first post-inspection processing section 51, and a second post-inspection processing section 52.

The inspection determination section 55 is a means for determining inspection by comparing the read image read by the image reading section 161 with the correct image. Note that the determination of the inspection is determination of whether the inspection is passed or failed. The first post-inspection processing section 51 is a means for controlling first post-inspection processing for an inspection error in the first area. The second post-inspection processing section 52 is a means for controlling second post-inspection processing for an inspection error in the second area. The inspection determination section 55 compares the correct image registered in the storage section 162 of the inspection device 16 with the image of the printed material read by the image reading section 161, for example, on the storage section 162, and detects a difference between both the images. If the difference is equal to or smaller than a predetermined threshold value, the inspection determination section 55 determines that the inspection is OK, and if it exceeds the threshold value, the inspection is NG. A specific example is described.

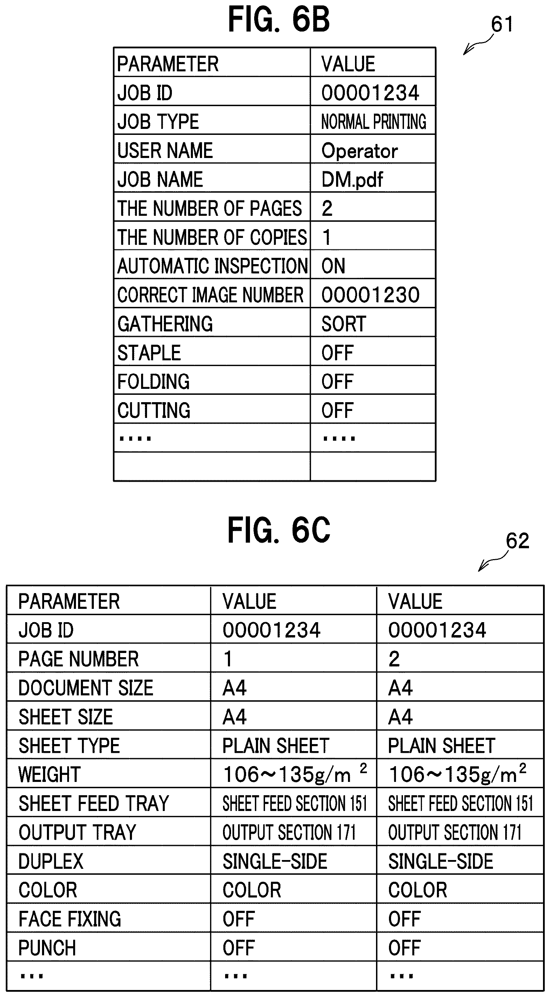

As illustrated in Figs. 6A to 6C, the print job ID00001234 includes image data 41, job information 61, and page information 62. The image data 41 is the same as that of the print job ID00001230. According to the job information 61, the number of pages is two, the number of copies is one, and automatic inspection is on. Note that the inspection is performed when the automatic inspection is on, and is not performed when the automatic inspection is off. According to the page information 62, the sheet size is set to A4, the sheet type is set to plain sheet, the sheet feed tray is set to the sheet feed section 151, the output tray is set to the output section 171, and the parameter for duplex is set to single-sided, that is, single-sided printing. According to the job information 61, the correct image number is 00001230. This means that a correct image based on the image data 41 included in the print job ID00001230 is used in inspection. Note that the method of generating the correct image is not particularly limited, and the correct image can be, for example, the above-described first, second, or third correct image.

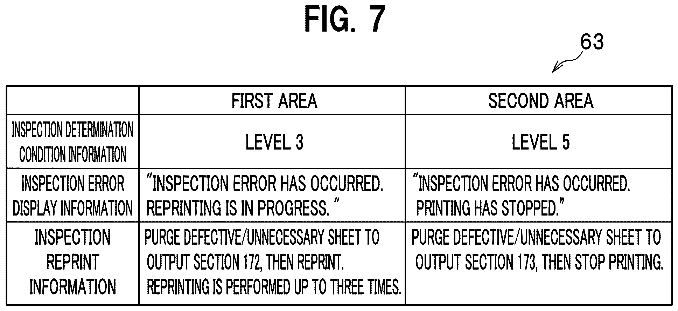

When the automatic inspection of the job information 61 is turned on, the inspection determination section 55 analyzes the area of the image data 41 and determines the presence or absence and the arrangement of a plurality of areas. Here, it is determined that the image data 41 has two areas, the first area 4111 and 4121 and the second area 4112 and 4122. Next, the inspection determination section 55 compares the read image of the printed material on which the image is formed by the print job ID00001234 with the correct image. In the comparison, a difference between both images is detected. The difference between the images is detected by paying attention to, for example, a distribution of pixels having different luminance, a positional deviation of pixels, a difference in chromaticity, and the like. Next, the inspection determination condition section 55 determines whether the inspection is passed or failed under different determination conditions for the first area and the second area. The inspection determination section 55 performs inspection with reference to the inspection setting information stored in the HDD102. The inspection setting information is information in which determination conditions of inspection and settings such as processing after the occurrence of an inspection error are summarized. As illustrated in Fig. 7, here, the inspection setting information 63 includes inspection determination condition information, inspection error display information, and inspection reprint information.

The inspection determination condition information indicates a determination condition for inspection, that is, the strictness of inspection, and is set to, for example, five levels from level 1 to level 5. The determination conditions of level 1 to level 5 have different threshold values. The "threshold value" is a value for determining the difference from the correct image as inspection pass. Level 5 is the strictest, and level 1 is the loosest. The inspection determination condition information is separately set for each area. That is, whether the first area and the second area are passable or not is determined under different determination conditions. Here, the first area is assigned level 3, and the second area is assigned level 5. For example, if the ratio of pixels that do not match the correct pixels is 3% or less at level 5, the inspection determination section 55 determines that the inspection has been passed. Similarly, if the same ratio is 5% or less at level 4, 10% or less at level 3, 20% or less at level 2, and 40% or less at level 1, the inspection determination section 55 determines that the inspection has passed. The threshold value for determining that the inspection is passed is freely set by the user.

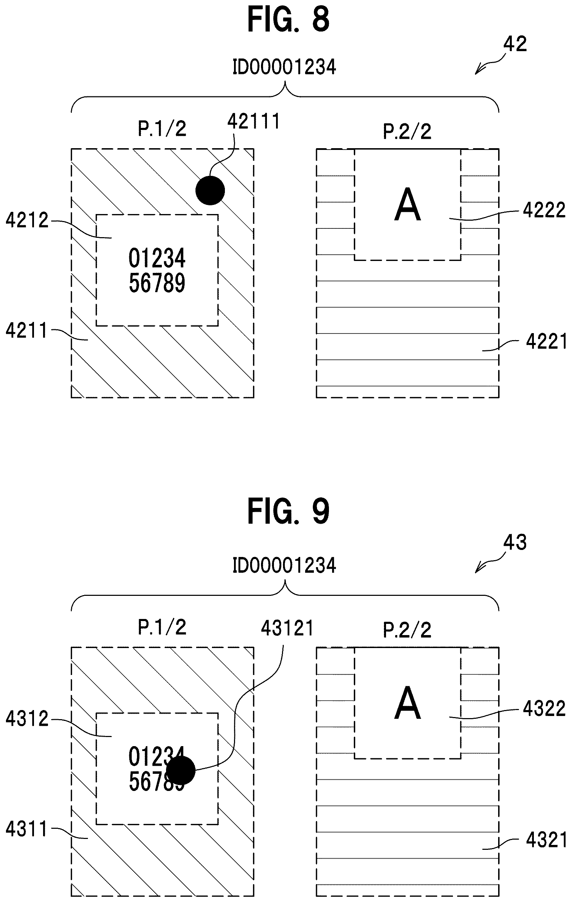

The inspection error display information indicates the content of an inspection error detection display to be displayed on the operation section 13 when an inspection error occurs. Here, when an inspection error has occurred in the first area, the operation section 13 is set to display a message such as "Inspection error has occurred. Reprinting is in progress. " When an inspection error occurs in the second area, the operation section 13 is set to display a message such as "Inspection error has occurred. Printing stopped." The inspection reprint information indicates the content of processing to be performed after an inspection error (inspection failure), that is, post-inspection processing. The inspection reprint information is separately set for each area. Thus, the inspection control section 50 performs different post-inspection processing depending on the area in which the inspection error is detected. That is, the first post-inspection processing section 51 performs the first post-inspection processing on the inspection error in the first area. The second post-inspection processing section 52 performs second post-inspection processing on the inspection error in the second area. The second post-inspection processing can be different from the first post-inspection processing. The post-inspection processing in each of the case where the area in which the inspection error is detected is the first area and the case where the area in which the inspection error is detected is the second area will be specifically described with reference to Figs. 8 and 9.

As illustrated in Fig. 8, in a read image 42 obtained by reading the printed material by the image reading section 161, the inspection error 42111 is detected in the first area 4211, and is not detected in the other first area 4221 and the second areas 4212 and 4222. Referring to the inspection reprint information of the inspection setting information 63, the message is set for the first area, in which "reprint after purging defective/unnecessary sheet to the output section 172" is provided. Reprinting is performed up to three times. " The defective sheet is a page on which an inspection error has occurred, for example, the first page. The unnecessary sheet is a page subsequent to the sheet in which the inspection error has occurred, for example, the second page. Purging is to output (sheet ejection) sheets as unnecessary sheets, such as defective sheets and unnecessary sheets. The first post-inspection processing section 51 outputs the defective/unnecessary sheet to the output section 172, and instructs each apparatus to perform reprinting from the page on which the inspection error has occurred.

At this time, in a case where there is a sheet on which an image has already been formed or a fed sheet, after the sheet is purged to the output section, reprinting is started from the page on which the inspection error has occurred. Here, in order to perform reprinting from the first page in which the inspection error has occurred, the sheet fed second page is output to the output section 172 so that the page order is not out of order, and then reprinting is started from the first page. Furthermore, even if an inspection error occurs again, reprinting is set to be repeated up to three times. If an inspection error still occurs in the fourth inspection, the printing is stopped.

On the other hand, as illustrated in Fig. 9, in the read image 43, the inspection error 43121 is detected in the second area 4312, and is not detected in the other second area 4322 and the first areas 4311 and 4321. Referring to the inspection reprinting information of the inspection setting information 63, the message is set for the second area, in which "Purge defective/unnecessary sheet to output section 173, then stop printing." The second post-inspection processing section 52 outputs the defective page causing the inspection error in the second area, for example, the first page, and the following unnecessary page, for example, the second page to the output section 173 and instructs each device to stop printing. This is processing for stopping printing in a case where resolution of the inspection error cannot be expected even if reprinting is performed. Note that the output section to which the defective sheet and the unnecessary sheet are purged is changed between the inspection error of the first area and the inspection error of the second area. Thus, the occurrence status of the inspection error can be visually confirmed on the printed material.

The image forming apparatus 1 does not perform reprinting in a case where one of the first area and the second area has the inspection error and performs reprinting in a case where the other one has the inspection error. As described above, the image forming apparatus 1 performs different post-inspection processing depending on the area in which the inspection error has occurred. Furthermore, in the post-inspection processing, whether to discard the sheet feed subsequent sheet can be separately set for each of the inspection error of the first area and the inspection error of the second area. Furthermore, the output section to be discarded can be set separately.

The image forming apparatus 1 according to the first embodiment applies the error determination condition, the error detection display, and the post-inspection process such as the reprinting process, which are different for each area, to a plurality of areas of the image data. Thus, optimum inspection and corresponding processing are performed. In a print job, a plurality of areas of image data may have different properties from each other, such as variable print and spot color areas. In such a case, setting the same determination conditions for the entire area of the printed material may result in an area where the determination is too strict or too loose. Further, even if reprinting is simply repeated in response to the occurrence of the inspection error, the cause of the inspection error may not be solved, and the operation of the apparatus or consumables such as printing sheet may be wasted.

Conventionally, regardless of whether a print job includes a plurality of areas having different properties, the same error determination condition, error detection display, and reprint processing are applied to all the areas. The image forming apparatus 1 applies different error determination conditions to the respective areas and performs the post-inspection processing, thereby achieving optimization of the determination of whether the inspection is passed or not and the post-inspection processing.

Note that the image forming apparatus 1 can also perform reprinting regardless of the area in which the inspection error has occurred. In that case, the upper limit of the number of times of repetition of reprinting is separately set. Even in this case, the image forming apparatus 1 performs different post-inspection processing depending on the area in which the inspection error has occurred. In addition, the inspection control section 50 may skip the registration of the correct image in the storage section 162, and may acquire the correct image and perform the inspection each time the inspection is performed, that is, from time to time, without using the correct image registered in the storage section 162. The inspection determination section 55 compares, on the memory 103, the read image with the correct image acquired at each inspection.

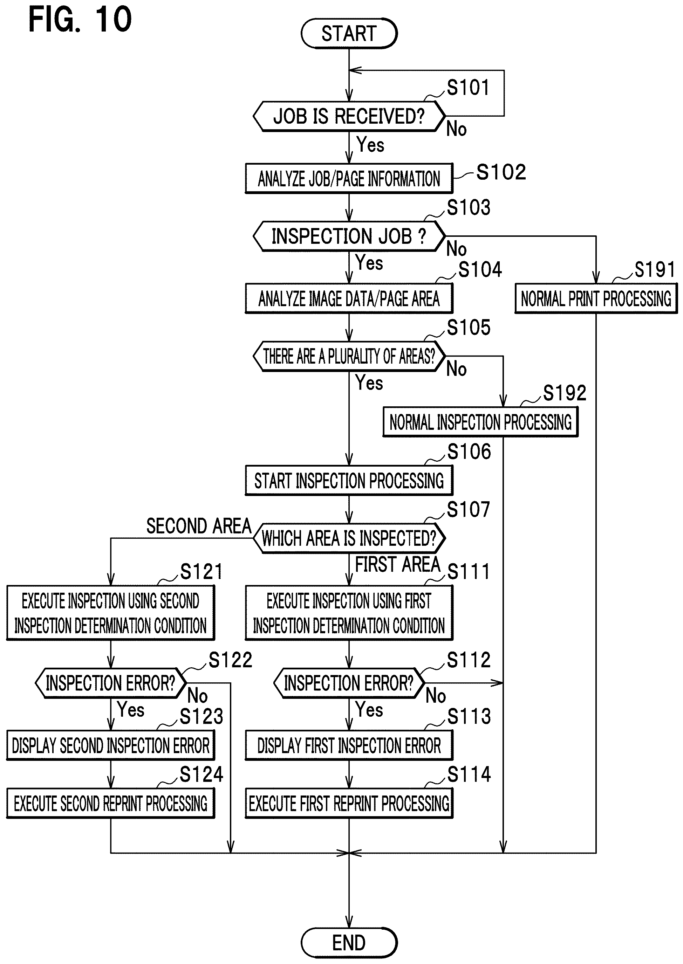

Next, a flow of inspection processing in the image forming apparatus 1 will be described with reference to Fig. 10. In the processing, the correct image has already been registered. Fig. 10 illustrates processing for printing a print job as an inspection target while inspecting it in comparison with the registered correct image. First, upon receiving a print job including image data via the communication section 105 (step S101:Yes), the controller 10 expands and analyzes the job information, page information, and image data in the print job on the memory 103 (step S102). If automatic inspection is ON in the job information (step S103:Yes), the inspection determination section 55 analyzes the area included in the image data (step S104). If the automatic inspection is not ON in the job information (step S103:No), normal print processing is performed (step S191).

If it is determined that there are a plurality of areas (step S105:Yes), the inspection control section 50 starts inspection processing different for each area (step S106). If it is determined that there are not a plurality of areas from the image data (step S105:No), normal inspection processing is performed (step S192). Note that the normal print processing is known print processing, and the normal inspection processing is known inspection processing. Next, the inspection determination section 55 determines whether the first area (step S107: Then, with reference to the inspection determination condition information held in the HDD, the inspection determination condition for the first area is executed (step S111). As a result, if no inspection error is detected (step S112:No), the process in FIG. 10 ends. If an inspection error is detected (step S112:Yes), the first post-inspection processing section 51 refers to the inspection error display information stored in the HDD and displays an inspection error for the first area on the operation section 13 (step S113). Furthermore, reprinting for the first area is executed with reference to the inspected reprint information stored in the HDD (step S114), and the processing in Fig. 10 ends.

On the other hand, in the second area (step S107: second area), the inspection determination section 55 refers to the inspection determination condition information stored in the HDD and executes the inspection determination conditions for the second area (step S121). As a result, if no inspection error is detected (step S122:No), the process in FIG. 10 ends. If an inspection error is detected (step S122:Yes), the second post-inspection processing section 52 refers to the inspection error display information stored in the HDD and displays an inspection error for the second area on the operation section 13 (step S123). Then, reprinting for the second area is executed with reference to the checked/reprinted information held in the HDD (step S124), and the process in FIG. 10 is terminated.

### (Second Embodiment)

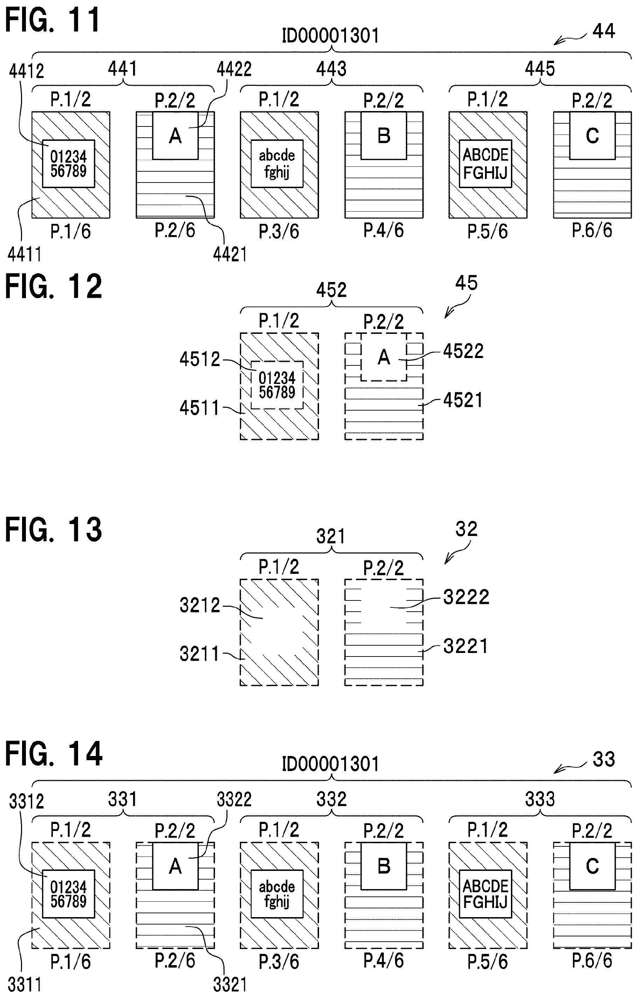

Next, an image forming apparatus according to a second embodiment will be described with reference to Figures 11 to 20. The printed material of the second embodiment is a variable print having a variable area and a fixed area. In the second embodiment, the print job is a print job of variable print (hereinafter may be referred to as "variable job"), and has a plurality of records. Therefore, the correct image is different from that of the first embodiment. Then, similarly to the first embodiment, the image forming apparatus performs different post-inspection processing depending on whether the area in which the inspection error has occurred is the first area or the second area. The hardware configuration is the same as that of the first embodiment. A specific example will be described below.

### (Correct Image)

As illustrated in FIG. 11, the image data 44 of the print job ID00001301 includes three records 441, 443, and 445. Each of the records is composed of two pages and corresponds to individual data of variable print. The image data 44 includes data for a total of six pages. One record corresponds to one piece of individual data. That is, the records are different from each other in the variable area, and are common in the fixed area. Here, the first areas 4411 and 4421 are fixed areas for variable printing, and the second areas 4412 and 4422 are variable areas. Note that the first area and the second area of the records 443 and 445 have the same arrangement as that of the record 441, and the reference signs thereof are omitted in the drawings.

The second areas 4412 and 4422, which are variable areas of the record 441, include characters "0123456789" on the first page and "A" on the second page. The variable area of the record 443 includes characters "abcdefghij" on the first page and "B" on the second page. The variable area of the record 445 includes characters "ABCDEFGHIJ" on the first page and "C" on the second page. The first areas 4411 and 4421, which are fixed areas of the record 441, have different patterns between the first page and the second page. The same applies to the other records 443 and 445. The pattern of the first page and the pattern of the second page are the same between the records. In the drawing, the symbol "P. x/y" at the top of each page indicates that the total of each record is y pages, and the image of the x-th page. The symbol "P. x/y" below each page represents the image of the x-th page when the total number of pages of the print job is y.

The correct image is generated from the read image of the part of the printed material. As illustrated in FIG. 12, the inspection control section 50 causes the image reading section 161 of the inspection device 16 to read a printed material on which an image formation of the first record (the record 441) of the image data 44 is formed, and acquires the record 452 of the read image 45. As illustrated in Fig. 13, the inspection control section 50 extracts the data of the first areas 4511 and 4521 that are fixed areas from the read image 45, and treats these data as the data of the first areas 3211 and 3221 of the area 321 of the intermediate data 32. The data of the second area 4512, 4522 is not used, and the intermediate data 32 does not include the data of the second area 3212, 3222. The intermediate data 32 is held in the storage section 162 as a correct image of the first area (fixed area) common to other records. Then, the inspection control section 50 generates a correct image during inspection while receiving the print job to be inspected. Here, the final correct image 33 for all the records is generated by combining the data of the second area (variable area) of the image data 44 with the intermediate data 32.

In Fig. 14, the data of the first areas 3311 and 3321 of the record 331 and the first areas of the records 332 and 333 is the data of the first area of the intermediate data 32. Furthermore, the data of the second area 3312 and 3322 of the record 331 and the second area of the records 332 and 333 are the data of the second area of the corresponding records 441, 443, and 445 in the image data 44.

### (Print Job)

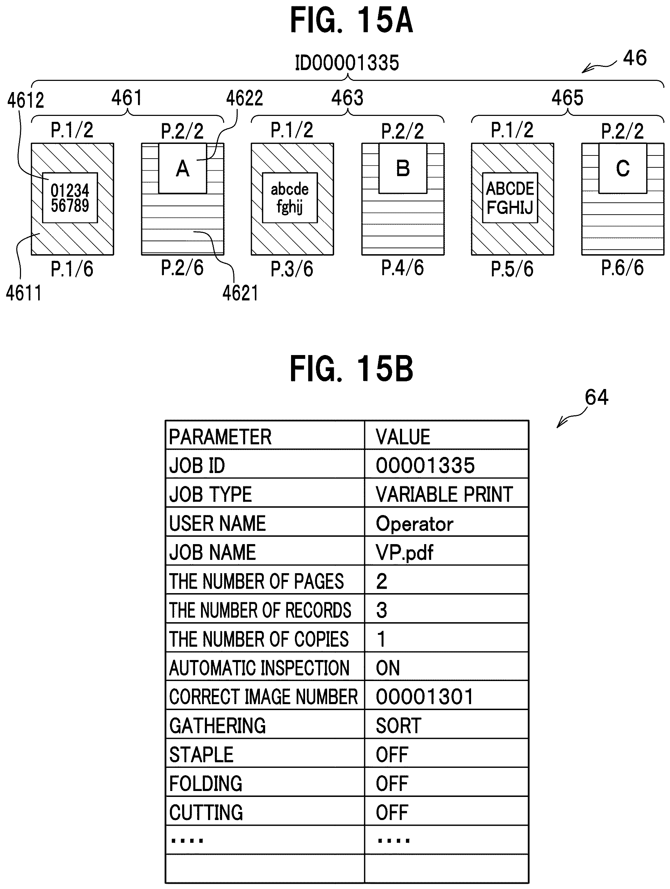

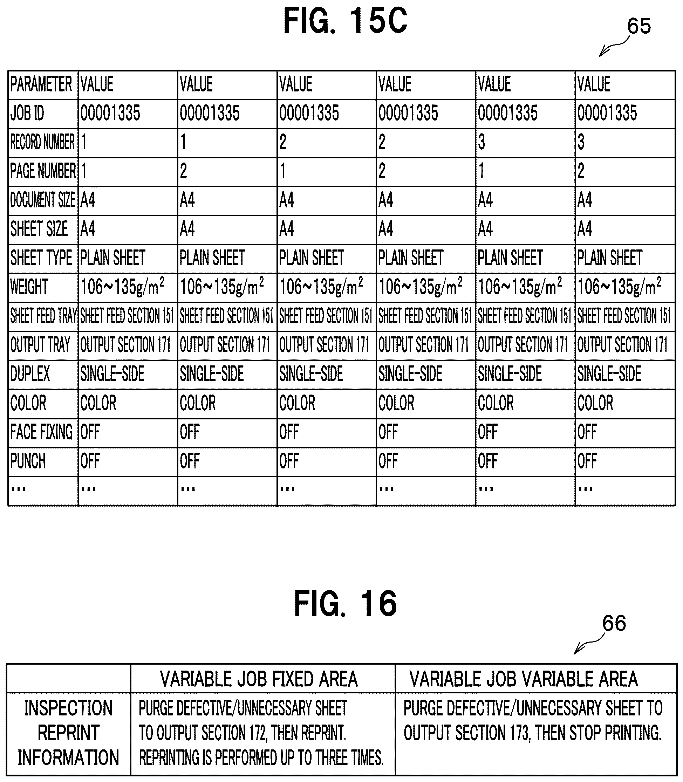

As illustrated in Figs. 15A to 15C, the print job ID00001335 for inspection includes image data 46, job information 64, and page information 65. In the image data 46, the record 461 includes first area 4611 and 4621 and second area 4612 and 4622. The records 463 and 465 also have the first area and the second area. Furthermore, as illustrated in Fig. 16, the inspection reprint information for each of the variable job fixed area (first area) and the variable job variable area (second area) is set in the inspection setting information 66. Although not illustrated in Fig. 16, the error determination condition and the error detection display can also be set differently for each area.

The inspection determination section 55 determines, from the job type of the job information 64, that the job is variable printing, and from the record number and the page number of the page information 65, that the job is a job of two pages and three records. The inspection determination section 55 specifies the positions of the fixed area and the variable area in each page from the image data 46. The correct image number of the job information 64 is 00001301, and a correct image based on the image data 44 included in the print job ID00001301 is designated. Note that the correct image based on the image data includes the image data itself, a read image of a printed material based on the image data, or a combination thereof. Here, the correct image 33 of Fig. 14 is used.

### (Post-Inspection Processing)

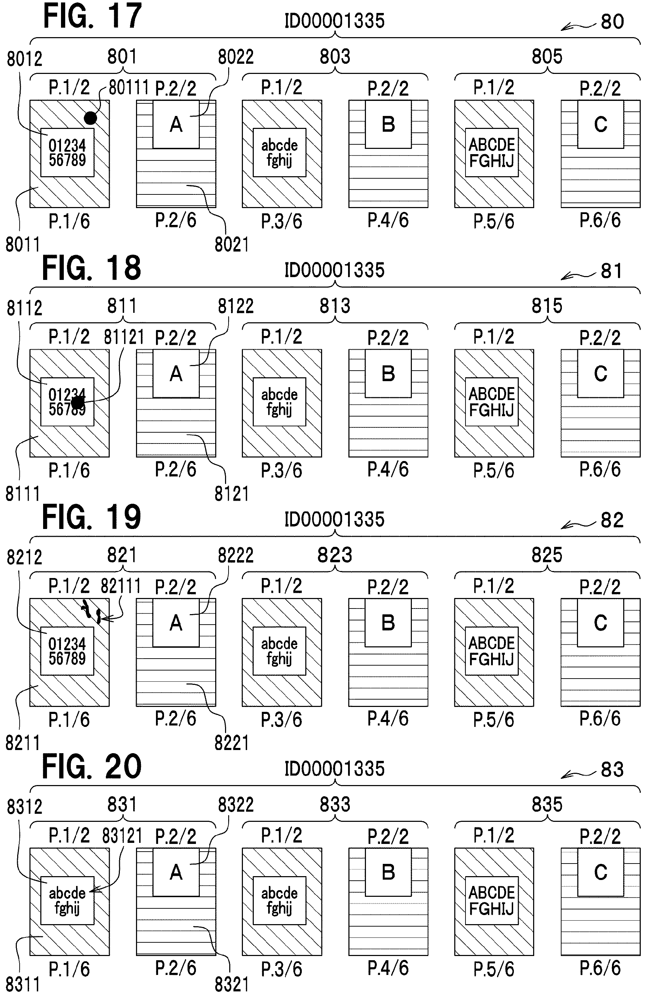

As illustrated in Fig. 17, in a read image 80 of the printed material of the print job ID00001335, a record 801 has first areas 8011 and 8021 and second areas 8012 and 8022. The records 803 and 805 also have a first area and a second area, respectively. An inspection error 80111 is detected in the first area 8011 that is a fixed area. In this case, the first post-inspection processing section 51 refers to the inspection setting information 66, purges the defective/unnecessary sheet to the output section 172, and instructs each apparatus to reprint from the page on which the inspection error has occurred. On the other hand, as illustrated in Fig. 18, in the read image 81, a record 811 has first areas 8111 and 8121 and second areas 8112 and 8122. The records 813 and 815 also have a first area and a second area, respectively. An inspection error 81121 is detected in the second area 8112 that is a variable area. In this case, the second post-inspection processing section 52 instructs each device to purge the defective/unnecessary sheet to the output section 173 and stop printing.

In Fig. 19, in the read image 82, a record 821 includes first area 8211 and 8221 and second area 8212 and 8222. The records 823 and 825 also have a first area and a second area, respectively. An inspection error 82111 in the fixed area (first area) occurs due to contamination. If the inspection error is caused by stain or the like, the error is often possibly resolved the error by reprinting and returned to normal printing. Therefore, post-inspection processing for reprinting is performed in response to an inspection error in the fixed area (first area). On the other hand, in Fig. 20, in the read image 83, a record 831 has first areas 8311 and 8321 and second areas 8312 and 8322. The records 833 and 835 also have a first area and a second area, respectively. In the second area 8312 that is the variable area in which the inspection error 83121 has occurred, the characters should be "0123456789", but are "abcdefghij". As described above, in a case where the inspection error occurs due to a mistake or a shift of data, it is not possible to return to normal printing by simple reprinting. For this reason, post-inspection processing is performed to stop printing without reprinting in response to an inspection error in the variable area (second area).

The image forming apparatus according to the second embodiment can perform optimal inspection and handling processing by applying different error determination conditions, error detection display, and post-inspection processing such as reprint processing for each area in the case of variable printing having a fixed area and a variable area. In the case of printing a large number of sheets with the same content, inspection of the printed material is performed by generating data of a "correct image" from the printed material that could be normally printed and comparing all of the printed material with the correct image. However, in the case of variable printing, for example, a printed material on which individual data such as an address and a name is printed has no other way of use, and when image formation of all pages of one job is performed to generate a correct image, the printed material for one job is wasted.

When the print job is variable printing, the image forming apparatus according to the second embodiment generates a correct image by combining a read image of a printed material in a fixed area and unprinted image data in a variable area, thereby improving the efficiency of inspection. The image forming apparatus performs optimum inspection and handling processing for an inspection error by applying post-inspection processing such as error determination conditions, error detection display, and reprint processing that are different for each area.

As the correct image, for example, the image data of the print job may be used as it is. The first area and the second area can be replaced with each other, and one of the first area and the second area may correspond to the fixed area and the other may correspond to the variable area.

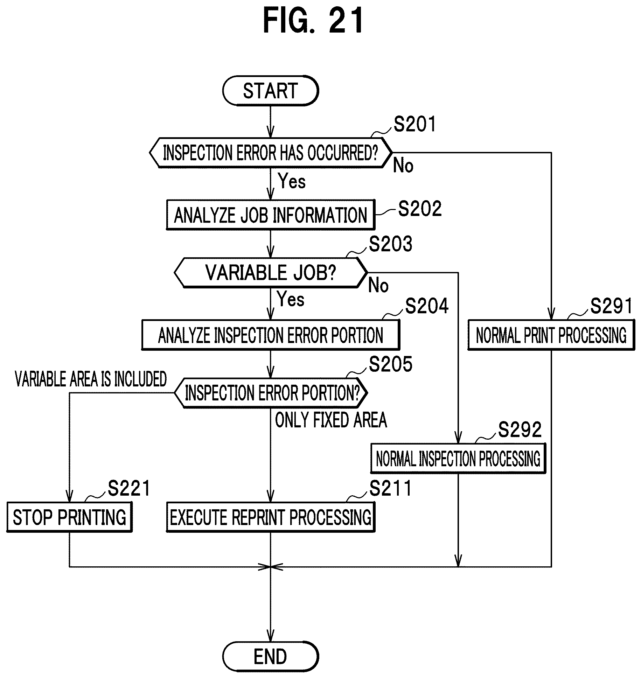

Next, a flow of inspection processing in the second embodiment will be described with reference to Fig. 21. In this processing, the read image of the first area has been registered. Fig. 21 illustrates processing for generating a correct image while a print job is in progress and printing a print job to be inspected while performing inspection of the print job. The correct image is generated by combining the read image of the first area with the data of the second area extracted from the image data.

First, when the inspection determination section 55 detects an inspection error during inspection printing (step S201:Yes), the inspection determination section 55 develops and analyzes job information, page information, and image data in a print job on the memory 103 (step S202). If no inspection error is detected (step S201:No), the controller 10 continues normal print processing (step S291). If the present job is a variable job (step S203:Yes), the inspection determination section 55 analyzes an inspection error portion (step S204). If the jobs are not variable jobs (step S203: No), the inspection control section 50 performs normal inspection processing (step S292).

If the inspection-error portion is only a fixed area of a variable job (step S205: Only fixed area), the first post-inspection processing section 51 executes reprint processing with reference to the inspection reprint information retained in the HDD (step S211), and ends the processing in Fig. 21. If the inspection error portion includes the variable area of the variable job (including step S205: variable area), the second post-inspection processing section 52 refers to the inspection reprint information held in the HDD, stops printing (step S221), and ends the processing in

FIG. 21.

Note that in the flow of the inspection processing according to the second embodiment (Fig. 21), after an inspection error occurs, an inspection error portion is analyzed (step S204). Instead of this, in the second embodiment, as in the processing flow (FIG. 10) of the first embodiment, the inspection can be performed after the area to be inspected is determined. The inspection control section 50 can perform inspection on the first and second areas under different determination conditions and perform different post-inspection proceedings. The same applies to the flow of the inspection processing in the third embodiment and fourth embodiment.

### (Third Embodiment)

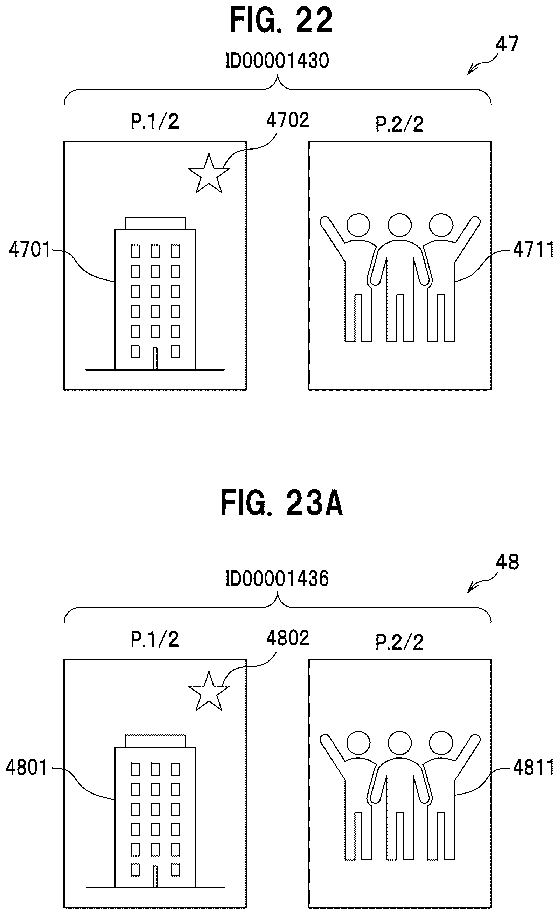

Next, an image forming apparatus according to a third embodiment will be described with reference to Figs. 22 to 26. The printed material of the third embodiment has a spot color area and a non-spot color area. In the third embodiment, a print job includes a spot color area. The spot color area is an area where high color reproducibility is required. Similarly to the first embodiment, different post-inspection processing is performed depending on whether the area in which the inspection error has occurred is the first area or the second area. The hardware configuration is the same as that of the first embodiment. A specific example will be described below.

### (Correct Image)

As illustrated in Fig. 22, the image data 47 of the print job ID00001430 includes two pages and has first areas 4701 and 4711 and a second area 4702. The first area 4701 and 4711 are areas other than the spot color area (hereinafter may be referred to as "non-spot color areas"). The second area 4702 is a spot color area. The correct image is the first, second, and third correct images described in the first embodiment, that is, the image data itself, a read image of a printed material based on the image data, or a combination thereof. Here, the correct image is image data 47 as it is.

### (Print Job)

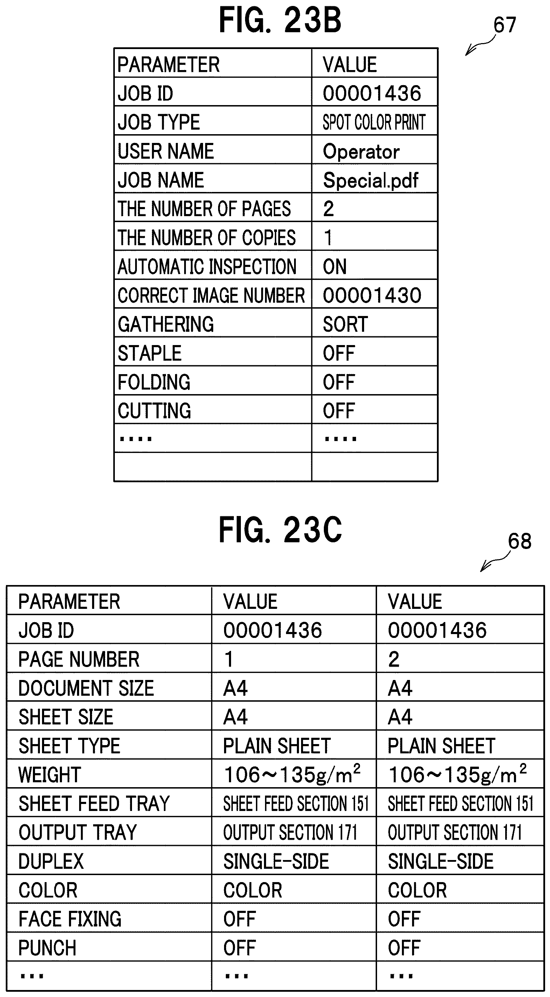

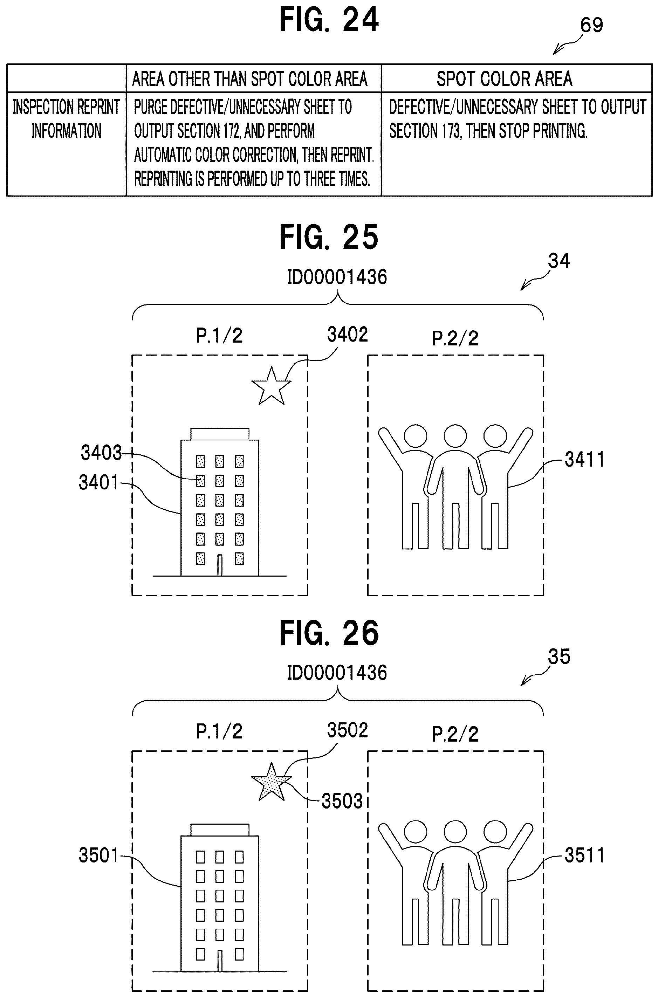

As illustrated in Figs. 23A to 23C, the print job ID00001436 to be inspected includes image data 48, job information 67, and page information 68. Furthermore, as illustrated in Fig. 24, the inspection/reprint information on each of the non-spot color area (first area) and the spot color area (second area) is set in the inspection setting information 69. Although not illustrated in Fig. 24, the error determination condition and the error detection display can also be set differently for each area. The inspection determination section 55 determines that the job is a spot color print including a spot color area from the job type of the job information 67, and determines the job of two pages from the page number of the page information 68. The inspection determination section 55 identifies, from the image data 48, positions of a non-spot color area and a spot color area in each page. The correct image number of the job information 67 is 00001430, and the correct image based on the image data 47 included in the print job ID00001430 is designated.

### (Post-Inspection Processing)

If the area where the inspection error is detected is a non-spot color area (first area), the first post-inspection processing section 51 refers to the inspection setting information 69, purges the defective/unnecessary sheet to the output section 172, and performs color correction processing (automatic color correction). Next, the first post-inspection processing section 51 instructs each apparatus to perform reprinting from the page on which the inspection error has occurred. On the other hand, when the area in which the inspection error is detected is a spot color area (second area), the second post-inspection processing section 52 instructs each device to purge defective/unnecessary sheet to the output section 173 and stop printing.

In Fig. 25, the read image 34 of the printed material of the print job ID00001436 has non-spot color areas 3401 and 3411 and a spot color area 3402. An inspection error 3403 of cyan tone failure occurs in the non-spot color area (first area) 3401. The non-spot color area other than the spot color area is likely to return to the color tone within the normal range by the automatic color adjustment even if a slight color variation occurs. Therefore, post-inspection processing of performing automatic color adjustment and then performing reprinting is performed for an inspection error of the non-spot color area (first area). On the other hand, in Fig. 26, the read image 35 includes non-spot color areas 3501 and 3511 and a spot color area 3502. The inspection error 3503 of gradation failure occurs in the spot color area (second area) 3502. The spot color area is used for printing an important object such as a corporate mark, and even a slight color variation is not allowed therein, and therefore, strict calibration needs to be performed again. Therefore, post-inspection processing for stopping printing is performed in response to an inspection error in the spot color area (second area).

The image forming apparatus according to the third embodiment performs optimum inspection and handling processing for an inspection error by applying post-inspection processing such as error determination conditions, error detection indication, and reprint processing that are different for each area if a print job includes a spot color area. Note that the first area and the second area can be replaced with each other, and one of the first area and the second area may correspond to the spot color area and the other may correspond to the non-spot color area.

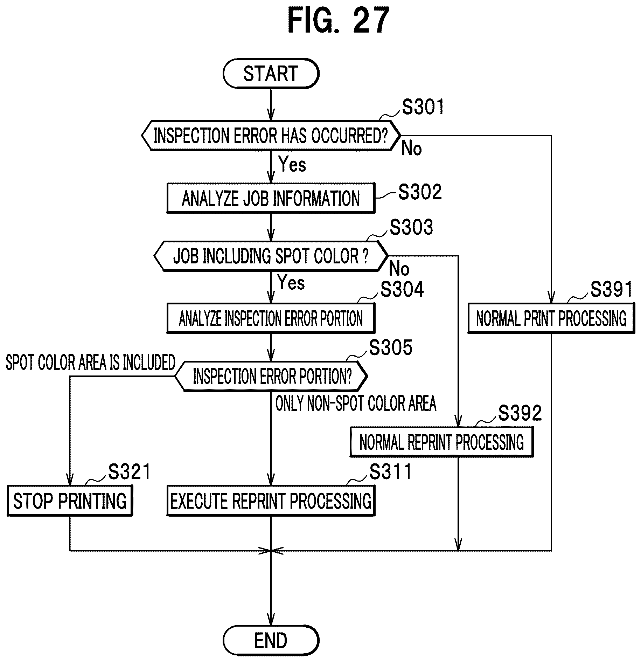

Next, a flow of inspection processing in the third embodiment will be described with reference to Fig. 27. In the processing, the correct image has already been registered. Fig. 27 illustrates processing for printing a print job as an inspection target while inspecting it in comparison with its registered correct image.

First, if the inspection determination section 55 detects an inspection error during inspection printing (YES in step S 301), the inspection determination section 55 develops and analyzes job information, page information, and image data in a print job on the memory 103 (step S302). If no inspection error is detected (step S301:No), the controller 10 performs normal print processing (step S391). If the job includes a spot color area (step S303:Yes), the inspection determination section 55 analyzes an inspection error portion (step S304). If the job does not include a spot color area (step S303: No), the inspection control section 50 performs reprint processing as normal inspection processing (step S392). When the inspection-error portion is only the non-spot color area (step S305: The first post-inspection processing section 51 refers to the inspection reprint information held in the HDD, performs automatic color correction, and then executes reprint processing (step S311), thus ending the processing in FIG. 27. If the inspection error spot includes a spot color area (step S305: Including variable area), the second post-inspection processing section 52 refers to the inspection reprint information retained in the HDD, stops printing (step S321), and ends the processing in Fig. 27.

### (Fourth Embodiment)

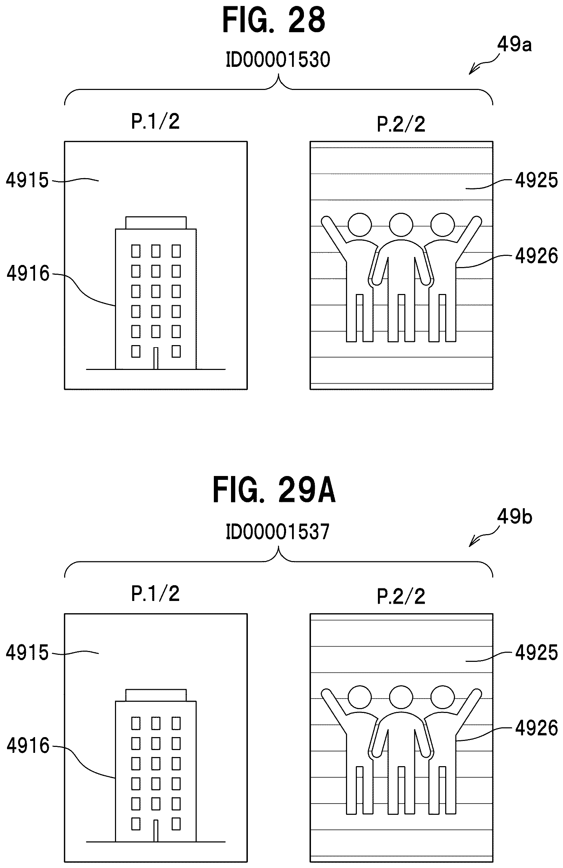

Next, an image forming apparatus according to a fourth embodiment will be described with reference to Figs. 28 to 32. The printed material of the fourth embodiment has a printed area and a non-printed area. That is, in the fourth embodiment, the print job includes a non-print area. The non-printing area is an area where image formation is not performed. The image forming apparatus compares an image read by an image reading section with a correct image to determine whether the inspection is passed or failed, and performs different post-inspection processing depending on whether an area where an inspection error has occurred is a printed area or a non-printed area. The hardware configuration is the same as that of the first embodiment. A specific example will be described below.

### (Correct Image)

As illustrated in Fig. 28, the image data 49a of the print job ID00001530 includes two pages and has a non-printing area 4915 and printing areas 4916, 4925, and 4926. Here, the first area is defined as a non-printing area, and the second area is defined as a printing area. The correct image is the first, second, and third correct images described in the first embodiment, that is, the image data itself, a read image of a printed material based on the image data, or a combination thereof. The combination is a combination of one of the print area and the non-print area in the image data and the other of the print area and the non-print area in the read image. Here, the correct image is image data 49a as it is.

### (Print Job)

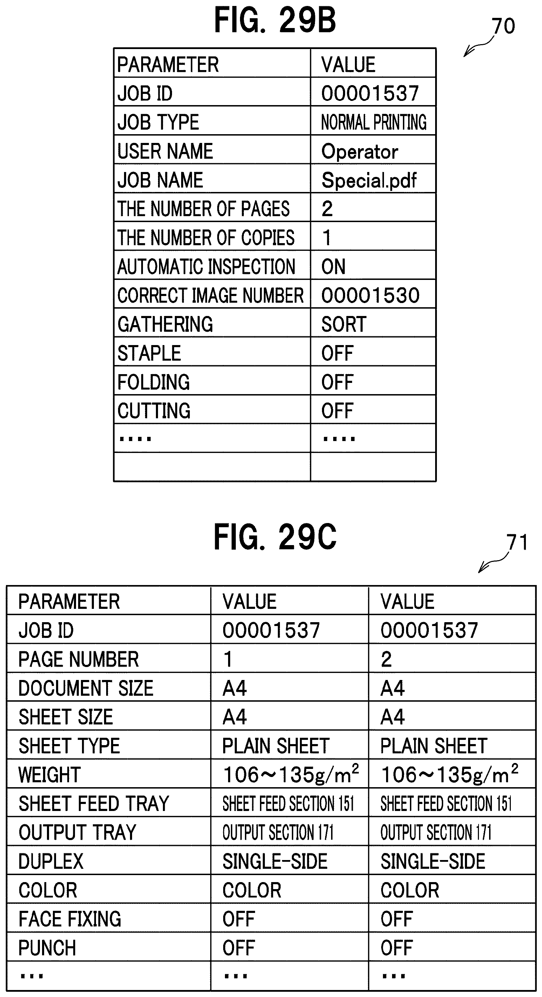

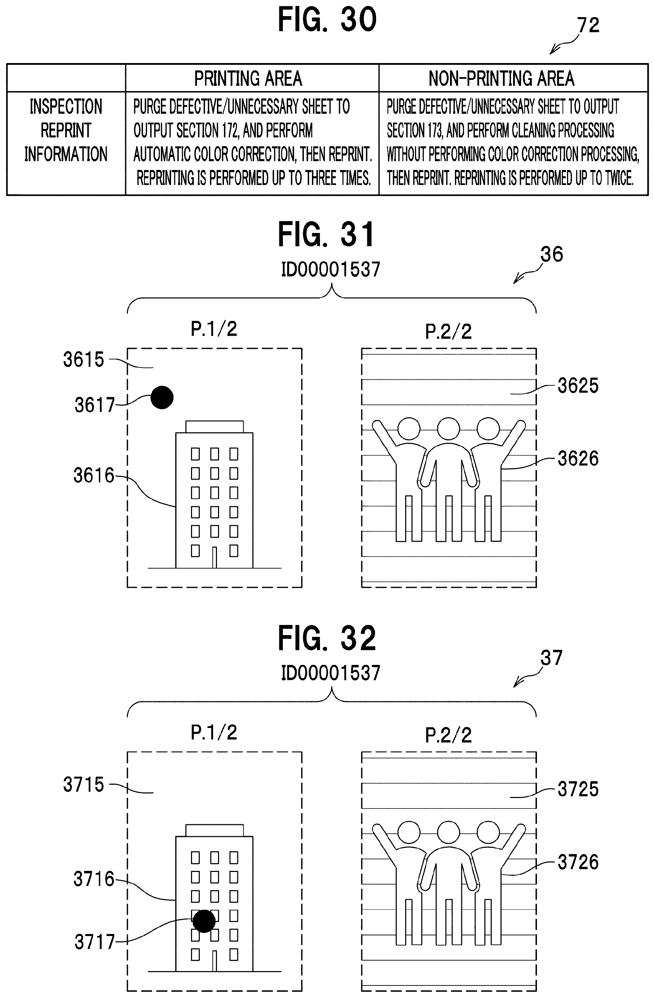

As illustrated in Figs. 29A to 29C, the print job ID00001537 for inspection includes image data 49b, job information 70, and page information 71. Further, as illustrated in FIG. 30, the inspection reprint information for each of the print area and the non-print area is set in the inspection setting information 72. Although not illustrated in Fig. 30, the error determination condition and the error detection display can also be set differently for each area. The inspection determination section 55 determines, from the job type of the job information 70, that the job is normal printing and, from the page information 71, that the job is a job for two pages. The inspection determination section 55 identifies, from the image data 49, the positions of a printing area and a non-printing area in each page. The correct image number of the job information 70 is 00001530, and the correct image based on the image data 49a included in the print job ID00001530 is designated.

### (Post-Inspection Processing)

In Fig. 31, a read image 36 of the printed material of the print job ID00001537 has a non-printing area 3615 and printing areas 3616, 3625, and 3626. An inspection error 3617 is detected in the non-printing area 3615. In this case, the first post-inspection processing section 51 refers to the inspection setting information 72, purges the defective/unnecessary sheet to the output section 173, and performs the cleaning processing of the image forming section 14 without performing the color correction processing (automatic color correction). The first post-inspection processing section 51 instructs each apparatus to perform reprinting from the page on which the inspection error has occurred. The cleaning processing refers to processing in which, in order to remove a cause of dirt generated on the transfer roller, the fixing device, or the like, the roller is rotated or the sheet is passed in a state where a cleaning blade or the like is in contact with the roller, so that the stuck dirt is removed. In a case where the problem is not solved by the cleaning processing, since there is a possibility of another cause, reprinting is performed up to twice.

On the other hand, in Fig. 32, the read image 37 has a non-printing area 3715 and printing areas 3716, 3725, and 3726. The inspection error 3717 is detected in the printing area 3716. In this case, the second post-inspection processing section 52 purges the defective/unnecessary paper to the output section 172 and performs automatic color correction. The second post-inspection processing section 52 instructs each apparatus to perform reprinting from the page in which the inspection error has occurred. Reprinting is performed up to three times. As described above, the upper limit number of times of reprinting is changed depending on whether the area in which the inspection error is detected is the print area or the non-print area.

Since the non-print area has no print object, the color fluctuation is not a cause. Therefore, color correction is not executed. Instead, since dirt or the like may be a cause of the inspection error, post-inspection processing is performed in which cleaning processing is performed and reprinting is performed. On the other hand, in a case where color variation occurs in a printed area, the printed area can often be restored to a color tone within a normal range by automatic color adjustment. Therefore, post-inspection processing for reprinting after the automatic color adjustment is performed.

When a print job includes a non-print area, the image forming apparatus according to the fourth embodiment applies post-inspection processing such as an error determination condition, error detection display, and reprint processing different for each area, thereby performing optimum inspection and processing for coping with an inspection error.

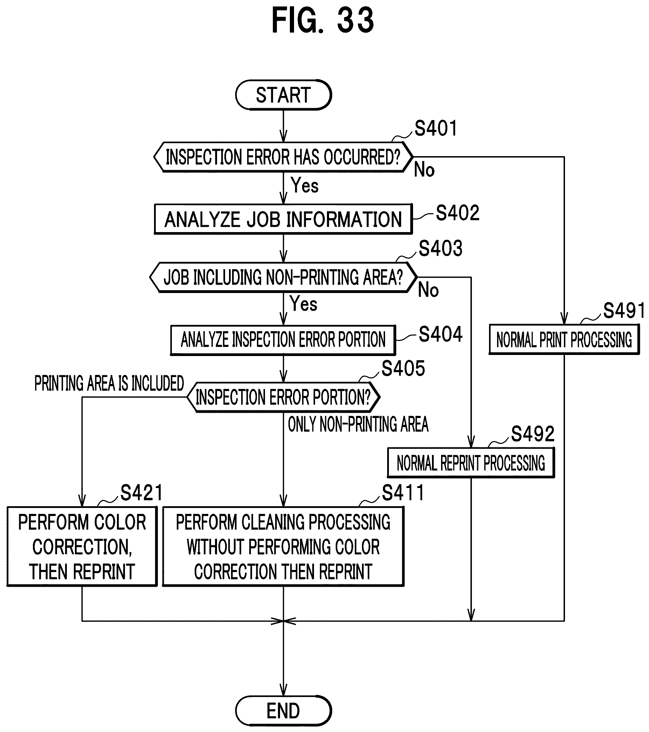

Next, a flow of inspection processing in the fourth embodiment will be described with reference to Fig. 33. In the processing, the correct image has already been registered. Fig. 33 illustrates processing for printing a print job as an inspection target while inspecting it in comparison with its registered correct image. First, when the inspection determination section 55 detects an inspection error during inspection printing (step S401: Yes), the inspection determination section 55 develops and analyzes job information, page information, and image data in a print job on the memory 103 (step S402). If no inspection error is detected (step S401: No), the controller 10 performs normal print processing (step S491).

If the job includes a non-print area (step S403: Yes), the inspection determination section 55 analyzes an inspection error portion (step S404). If the job does not include a non-print area (step S403: No), the inspection control section 50 performs reprint processing as normal inspection processing (step S492). If the inspection-error portion is only a non-printing area (step S405: Only in non-printed area), the first post-inspection processing section 51 refers to the inspection reprint information retained in the HDD102, performs cleaning processing without performing automatic color correction, and performs reprinting (step S411), and the processing in Fig. 33 ends. If the inspection error portion includes the print area (including the step S405: print area), the second post-inspection processing section 52 refers to the inspection reprint information held in the HDD102, performs automatic color correction, and executes reprint processing (step S421), thus ending the processing in FIG. 33.

### (Fifth Embodiment)

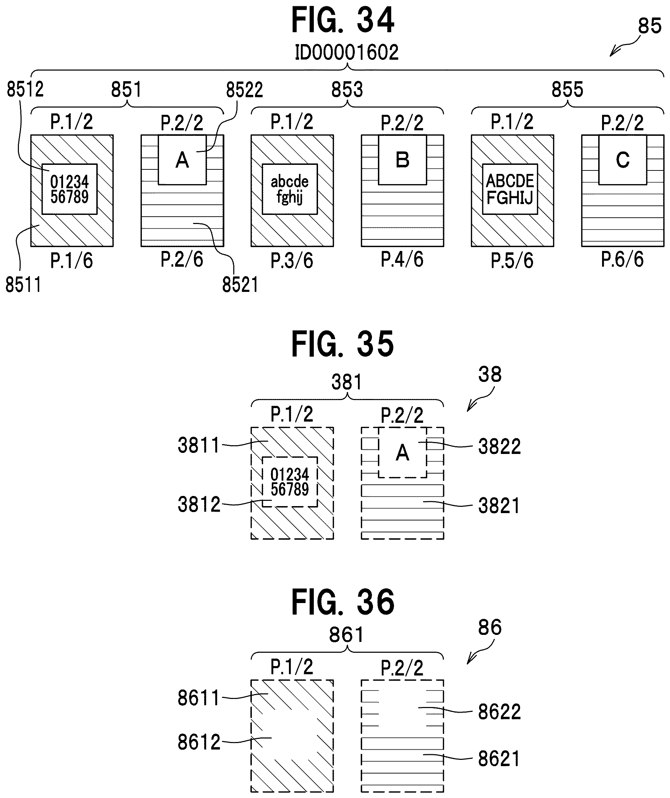

Next, an image forming apparatus according to a fifth embodiment will be described with reference to Figs. 34 to 46. In the image forming apparatus according to the fifth embodiment, in the determination for one of the first area and the second area, the text is recognized by the OCR processing from the image read by the image reading means, and is compared with the text included in the print data. Then, in response to an inspection error in the text comparison, the image forming apparatus performs image processing on one of the print data and reprints the print data. In the first embodiment, the correct image is the image data itself, the read image of the printed material based on the image data, or a combination thereof. The fifth embodiment is different from the first embodiment in that optical character recognition (OCR) processing is performed on an area including characters to extract a character string, and the extracted character string and a character string of text data (record data in a variable job) of a print job to be inspected are compared with each other. If the character string on the sheet to be inspected cannot be recognized by the OCR processing, various kinds of image processing are performed and reprinting is performed. The hardware configuration is the same as that of the first embodiment.
A specific example will be described below.

### (Correct Image)

As illustrated in Fig. 34, the image data 85 of the print job ID00001602 includes three records 851, 853, and 855. Each record includes two pages and corresponds to individual data of variable print. The image data 85 includes data for a total of six pages. One record corresponds to one piece of individual data. That is, the respective records are different from each other in the variable area, and are common in the fixed area. Here, the first areas 8511 and 8521 are fixed areas for variable printing, and the second areas 8512 and 8522 are variable areas. Note that the first area and the second area of the records 853 and 855 have the same arrangement as that of the record 851, and the reference signs thereof are omitted in the drawings.

The second areas 8512 and 8522, which are variable areas of the record 851, include characters "0123456789" on the first page and "A" on the second page. The variable area of the record 853 includes characters "abcdefghij" on the first page and "B" on the second page. The variable area of the record 855 includes characters "ABCDEFGHIJ" on the first page and "C" on the second page. The first areas 8511 and 8521, which are fixed areas of the record 851, have different patterns between the first page and the second page. The same applies to the other records 853 and 855. The page of the first page and the page of the second page are the same between the records.

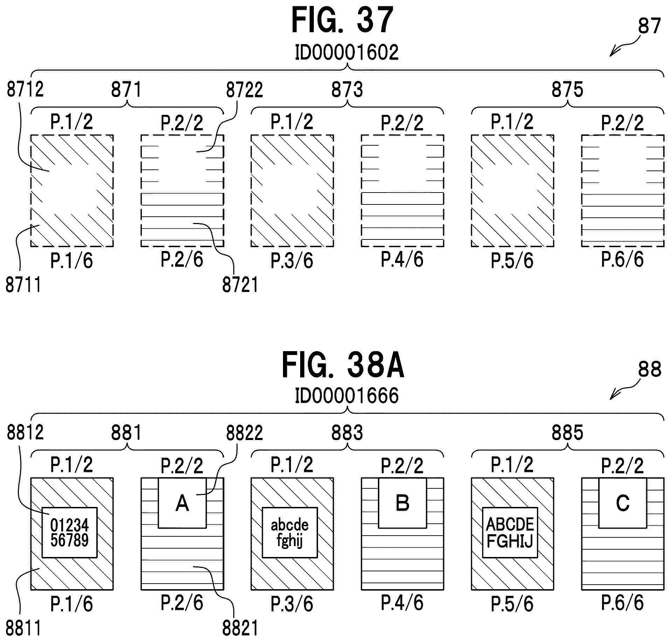

The correct image is generated from the read image of the part of the printed material. Here, as illustrated in FIG. 35, the inspection control section 50 causes the image reading section 161 of the inspection device 16 to read a printed material on which an image formation of the first record (the record 851) of the image data 85 is formed, and acquires the record 381 of the read image 38. As illustrated in Fig. 36, the inspection control section 50 extracts the data of the first areas 3811 and 3821 that are fixed areas from the read image 38, and treats the data as the data of the first areas 8611 and 8621 of the record 861 of the intermediate data 86. The data in the second areas 3812 and 3822 is not used, and the intermediate data 86 does not include the data in the second areas 8612 and 8622. The intermediate data 86 is held in the storage section 162 as a correct image of the first area (fixed area) common to the other records. In the correct images 87 of all the pages illustrated in Fig. 37, the data in the first areas 8711 and 8721 of the record 871 and the first areas of the records 873 and 875 are the data in the first area of the intermediate data 86.

On the other hand, the correct image 87 does not have data in the second areas 8712 and 8722 of the record 871 and the second areas of the records 873 and 875. For the second area (variable area), a correct image is not generated, and the character string read by the OCR processing is compared with the text data of the print job. The inspection determination section 55 compares the inspection of the first area (fixed area) with the correct image 87 based on the print job ID00001602. The inspection determination section 55 performs inspection of the second area (variable area) by comparing it with the text data of the print job ID00001666.

### (Print Job)

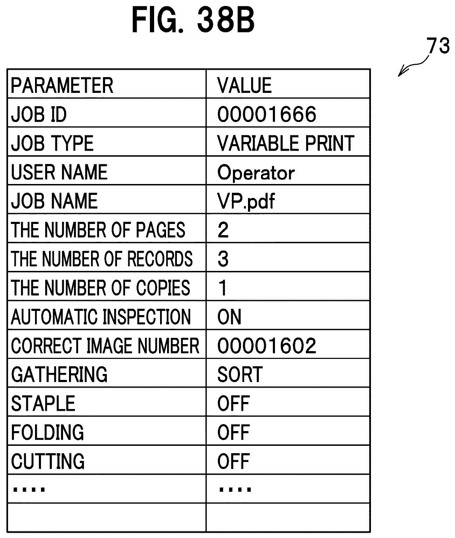

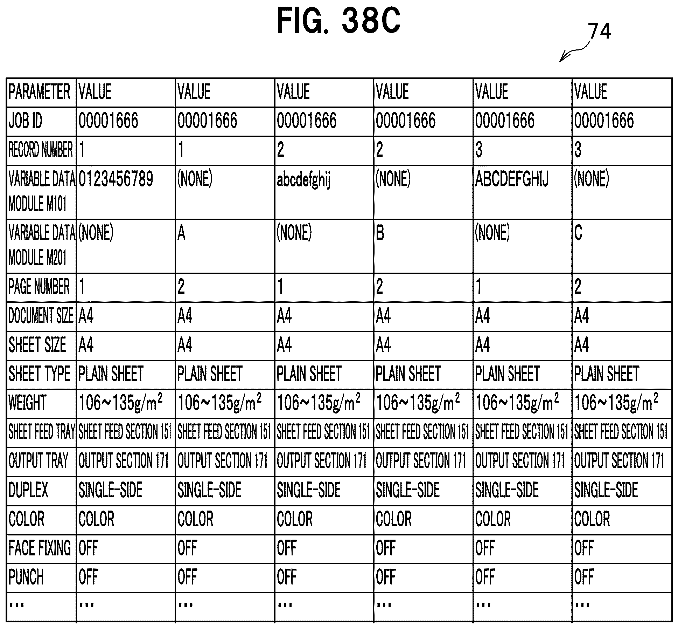

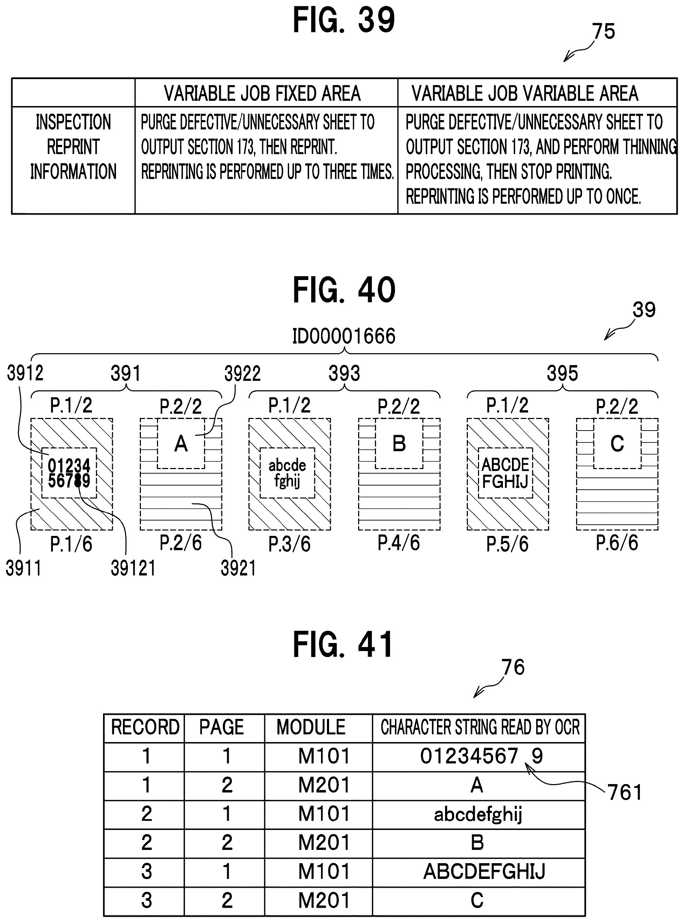

As illustrated in Figs. 38A and 38C, the print job ID00001666 to be inspected includes image data 88, job information 73, and page information 74. In the image data 88, the record 881 includes first areas 8811 and 8821 and second areas 8812 and 8822. The other records 883 and 885 also have the first area and the second area. As illustrated in Fig. 39, in the inspection setting information 75, the inspection reprint information for each of the variable job fixed area (first area) and the variable job variable area (second area) is set. Although not illustrated in Fig. 39, the error determination condition and the error detection display can also be set differently for each area.

The inspection determination section 55 determines, from the job type of the job information 73, that the job is variable printing. The inspection determination section 55 determines a job of two pages and three records from the record number and the page number of the page information 74. The text data of the print job is included in the page information 74 as variable data. The module M101 corresponds to the first page, and the module M201 corresponds to the second page. Then, the positions of the fixed area and the variable area in each page are specified from the image data 88. The correct image number of the job information 73 is 00001602, and a correct image based on the image data 85 included in the print job ID00001602 is designated. Here, the correct image 87 in FIG. 37 is used as the correct image of the fixed area (first area).

### (Post-Inspection Processing)

If the area in which the inspection error has occurred is a fixed area (first area), the first post-inspection processing section 51 refers to the inspection setting information 75, purges the defective/unnecessary sheet to the output section 173, and instructs each apparatus to perform reprinting from the page in which the inspection error has occurred. Reprinting is performed up to three times. On the other hand, as illustrated in Fig. 40, in a read image 39 of the printed material of the print job ID00001666, a record 391 has the first areas 3911 and 3921 and the second areas 3912 and 3922. The records 393 and 395 also each have the first area and the second area. An inspection error 39121 is detected in the second area 3912 that is a variable area. In this case, the second post-inspection processing section 52 refers to the inspection setting information 75 and purges the defective/unnecessary sheet to the output section 173. The second post-inspection processing section 52 instructs each device to perform the thinning processing and stop printing. Reprinting is performed up to once.

In many cases, the inspection error in the fixed area (first area) can be cleared by reprinting and normal printing can be recovered. Therefore, post-inspection processing for reprinting is performed in response to an inspection error in the fixed area (first area). On the other hand, in the inspection of the variable area (second area), an inspection error 761 of mismatching of letters occurs in the read image 76 by the OCR processing illustrated in Fig. 41. Since the characters have not been normally read by the OCR processing, it is conceivable that this may be caused by character collapse or the like such as an inspection error 39121 of the read image 39 illustrated in Fig. 40.

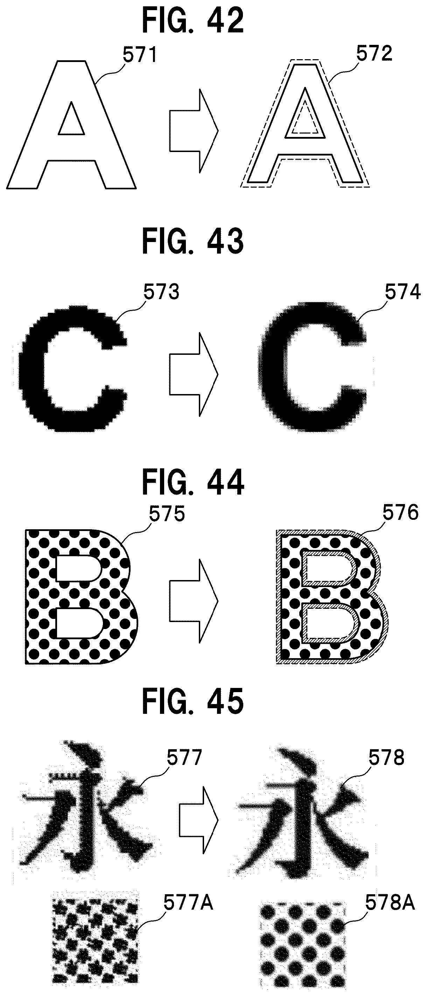

If the inspection error is caused by character collapse, it may be solved by the thinning processing. As illustrated in FIG. 42, by the thinning processing, a character 572 after the processing becomes thinner as a whole than a character 571 before the processing, and the inspection error can be solved in some cases. For this reason, post-inspection processing for performing reprinting after executing image processing for thinning is performed.

The image forming apparatus according to the fifth embodiment generates a correct image based on a read image of a printed material for a fixed area and compares OCR-processed data of the printed material with text data of a print job for a variable area in a case where the print job includes characters such as variable printing. Thus, the accuracy of the inspection can be improved. Also, different error determination conditions, error detection display, and post-inspection processing such as reprint processing are applied for each area. Thus, optimum inspection and processing for coping with an inspection error can be performed.

Note that examples of the image processing for normalizing the character recognizability include smoothing processing, edge enhancement processing, and screen change, in addition to the thinning processing. These image proceedings are applied to the variable area. As illustrated in Fig. 43, by the smoothing processing, the outer edge of the character 574 after the processing is smoother than that of the character 573 before the processing. As illustrated in FIG. 44, by the edge enhancement processing, the outline of the character 576 after the processing is enhanced with respect to the character 575 before the processing. As illustrated in Fig. 45, the dot shapes and the like have changed from the screen 577A before processing to the screen 578A after processing due to the screen change. As a result, compared to the character 577 before the processing, the character 578 after the processing does not have noticeable large unevenness.

Due to the use characteristics of variable printing, the final destination to which each record corresponding to individual data is used is independent, so that it is not necessary to strictly adjust image processing of the variable area among all the records. For this reason, in many cases, there is no problem even if image processing such as thinning is applied only to the record in which the inspection error has occurred. On the other hand, since the fixed area is common to all the records, image processing is not applied to the fixed area.

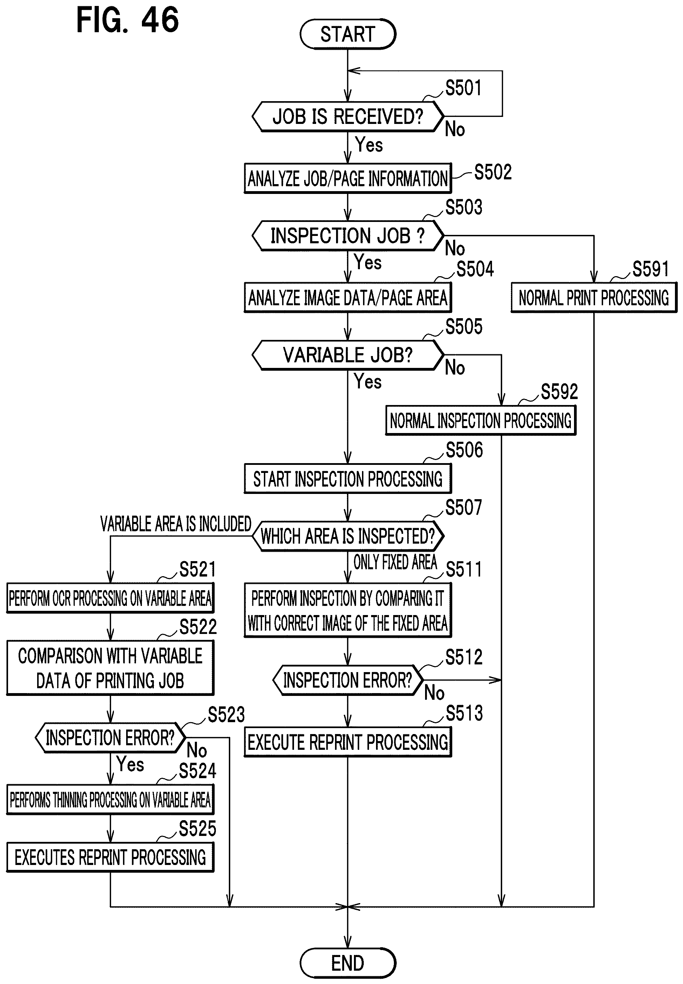

Next, a flow of inspection processing in the fifth embodiment will be described with reference to Fig. 46. In this processing, the correct image has been registered for the fixed area. FIG. 46 illustrates an example of processing for printing a print job to be inspected while inspecting the print job by comparing a fixed area with a registered correct image and comparing a variable area with a character string read by an OCR. First, when the controller 10 receives a print job including image data via the communication section 105 (step S501: Yes), the controller 10 develops and analyzes job information, page information, and image data included in the print job on the memory 103 (step S502). If the automatic inspection is ON in the job information (step S503: Yes), the inspection determination section 55 analyzes an area in the image data (step S504). If the automatic inspection is OFF in the job information (step S503: No), the controller 10 performs normal print processing (step S591).

If the job information indicates variable printing (step S505: Yes), the inspection control section 50 starts inspection processing different for each area (step S506). If it is not variable print (step S505: No), the inspection control section 50 performs normal inspection processing (step S592). Next, the inspection determination section 55 determines whether the fixed area has been inspected (step S507: Only the fixed area), and compares it with the correct image of the fixed area (step S511). If an inspection error occurs in the fixed area (step S512: Yes), the first post-inspection processing section 51 refers to the inspection reprint information and performs reprinting (step S513), and the processing in Fig. 42 ends.

In the inspection of the variable area (including step S507: variable area), the OCR processing is performed on the variable area to extract the text (step S521), and the correct image is not used and is compared with the text of the print job (step S522). If an inspection error occurs in the variable area (step S523:Yes), the second post-inspection processing section 52 refers to the inspection reprint information, performs thinning processing on the variable area (step S524), executes reprint (step S525), and ends the processing in FIG. 46.

### (Sixth Embodiment)

Next, an image forming apparatus according to a sixth embodiment will be described. In the sixth embodiment, in response to the inspection error in the comparison of the text, the text is recognized by the OCR processing, and the print data of one of the first area and the second area compared with the text included in the print data is reprinted by changing the font. The sixth embodiment is different from the fifth embodiment in that, in a case where a character cannot be recognized by the OCR processing, font change is performed instead of the image processing such as the thinning and then reprinting is performed, and the other points are common to the fifth embodiment. The font change is, for example, processing such as increasing the size of the font or thinning the line, and the font may be replaced with a font type having high visibility. Thus, the visibility of the text can be increased.

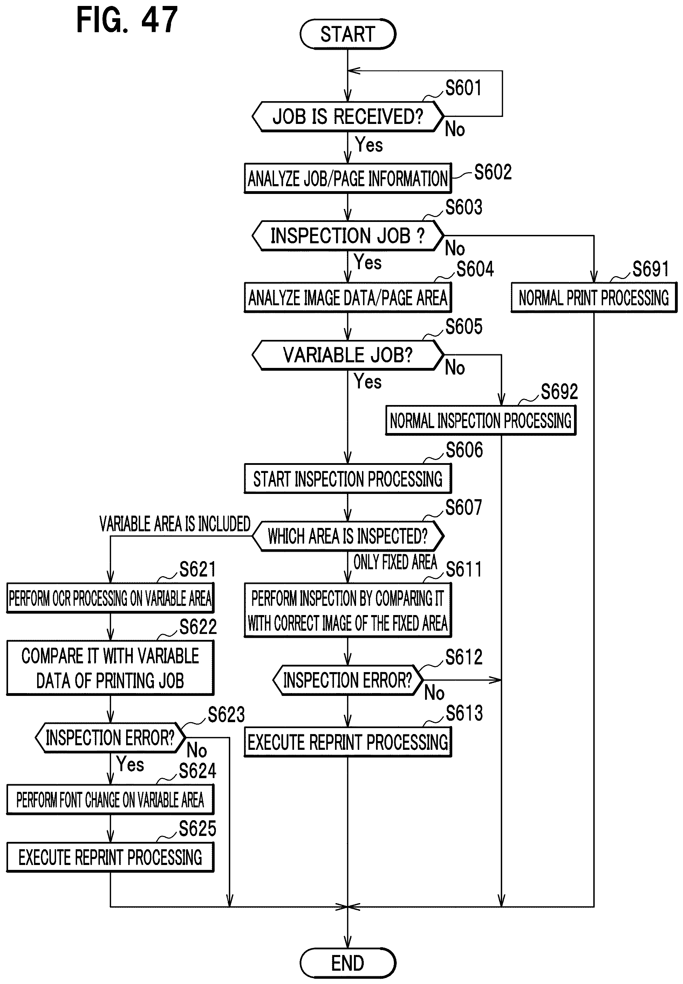

The flow of inspection processing in the sixth embodiment is substantially the same as that in the fifth embodiment, and a description thereof will be omitted. Step S524 in which image processing such as thinning is performed on the variable area in the fifth embodiment (Fig. 46) is replaced with step S624 in which font change is performed in the sixth embodiment (Fig. 47).

### (Control Method of Image Forming Apparatus)

The control method of an image forming apparatus is a method of operating the image forming apparatus as the image forming apparatus according to the embodiment. A method of controlling an image forming apparatus includes: a step in which an image reading section reads an image of a printed material to acquire a read image; a step in which an inspection determination section compares the read image read by the image reading section with a correct image to determine inspection; a step in which a first post-inspection processing section performs first post-inspection processing on an inspection error in a first area of the read image; and a step in which a second post-inspection processing section performs second post-inspection processing, which is different from the first post-inspection processing, on an inspection error in a second area of the read image.

### (Control Program)

The control program is a program that is read by a controller of the image forming apparatus and causes the image forming apparatus to function as the image forming apparatus according to the embodiment. The control program causes the computer to execute a sequence of reading an image of a printed material to acquire a read image, a sequence of comparing the read image read from the printed material with a correct image to determine inspection, a sequence of performing first post-inspection processing for an inspection error in a first area of the read image, and a sequence of performing second post-inspection processing different from the first post-inspection processing for an inspection error in a second area of the read image.

The image forming apparatus may be controlled by a computer that reads the control program according to the embodiment. The control program according to the embodiment can be obtained through an electric communication line and can be recorded in a computer-readable recording medium. Although embodiments of the present invention have been described and illustrated in detail, the disclosed embodiments are made for purpose of illustration and example only and not limitation. The scope of the present invention should be interpreted by terms of the appended claims.

## Claims

1. An image forming apparatus comprising:
an image reader (161) configured to acquire a read image (40;41;43) by reading an image of a printed material;
an inspection determination section (55) configured to determine inspection by comparing the read image read by the image reader with a correct image;
a first post-inspection processing section (51) configured to perform a first post-inspection processing on a first inspection error in a first area (4011;4021;4111;4121;4311;4321) of the read image; and
a second post-inspection processing section (52) configured to perform a second post-inspection processing different from the first post-inspection processing on a second inspection error in a second area (4012;4022;4112;4122;4312;4322) of the read image.

2. The image forming apparatus according to claim 1,
wherein the inspection determination section (50) is configured to determine the first area and the second area under respective different determination conditions.

3. The image forming apparatus according to claim 1, further comprising: a storage (162) configured to store the correct image,
wherein the inspection determination section (50) uses the read image as the correct image.

4. The image forming apparatus according to claim 3,
wherein the inspection determination section (50) uses, as the correct image, the read image for the first area and a print data for the second area.

5. The image forming apparatus according to claim 1,
wherein the first post-inspection processing section (51) and the second post-inspection processing section (52) do not perform reprinting in a case where the first area has the first inspection error, and perform reprinting in a case where the second area has the second inspection error.

6. The image forming apparatus according to claim 5,
wherein the printed material is a variable print including a variable area and a fixed area,
wherein the first area is the fixed area, and
wherein the second area is the variable area.

7. The image forming apparatus according to claim 1, further comprising: a storage (162) configured to store the correct image,
wherein the inspection determination section (55) is configured to detect a text by executing an OCR processing on the second area, and to compare the text with a text data included in the second area of the correct image held in the storage section.

8. The image forming apparatus according to claim 7,
wherein the second post-inspection processing section (52) is configured to perform an image processing on the print data in the second area and reprint the print data in response to a second inspection error in comparison with text data.

9. The image forming apparatus according to claim 7,
wherein in response to a second inspection error in comparison with the text data, the second post-inspection processing section (52) is configured to change a font for the print data in the second area and reprint the print data.

10. The image forming apparatus according to claim 5,
wherein the printed material has a spot color area and a non-spot color area, and
wherein the first area is a spot color area and the second area is a non-spot color area.

11. The image forming apparatus according to claim 1,
wherein the first area is a non-printing area, and the second area is a printing area,
wherein the first post-inspection processing section (51) is configured to execute reprinting including cleaning processing of an image forming section in a case where the non-printing area has a first inspection error, and
wherein the second post-inspection processing section (52) is configured to execute reprinting including a color correction processing in a case where the print area has a second inspection error.

12. The image forming apparatus according to claim 1,
wherein the first post-inspection processing section (51) and the second post-inspection processing section (52) separately set upper limits of the number of times of repetition of reprinting for a first inspection error and a second inspection error respectively.

13. The image forming apparatus according to claim 1,
wherein the first post-inspection processing section (51) and the second post-inspection processing section (52) separately set, for a first inspection error and a second inspection error, whether or not to discard a feed subsequent sheet and output sections for a discard destination when the subsequent sheet is discarded respectively.

14. A control method for an image forming apparatus comprising:
acquiring, by an image reader (161), a read image by reading an image of a printed material;
determining inspection by comparing, by an inspection determination section (55), the read an image read by the image reader with a correct image;
performing, by a first post-inspection processing section (51), a first post-inspection processing on a first inspection error in a first area of the read image; and
performing, by a second post-inspection processing section (52), a second post-inspection processing different from the first post-inspection processing on a second inspection error in a second area of the read image.

15. A control program causing a computer to perform:
acquiring a read image by reading an image of a printed material;
determining inspection by comparing a read image read from the printed material with a correct image;
performing a first post-inspection processing on a first inspection error in a first area of the read image; and
performing a second post-inspection processing different from the first post-inspection processing on a second inspection error in a second area of the read image.
